Europäisches Patentamt

European Patent Office

Office européen des brevets

(19)

(11) EP 1 593 417 A1

(12) EUROPEAN PATENT APPLICATION
published in accordance with Art. 158(3) EPC

(43) Date of publication:
09.11.2005 Bulletin 2005/45

(51) Int Cl.⁷: **B01D 9/02**, C01B 25/45,
C01B 25/32, C01F 11/22,
C02F 1/58

(21) Application number: 04703501.9

(22) Date of filing: 20.01.2004

(86) International application number:
PCT/JP2004/000437

(87) International publication number:
WO 2004/067139 (12.08.2004 Gazette 2004/33)

(84) Designated Contracting States:
AT BE BG CH CY CZ DE DK EE ES FI FR GB GR
HU IE IT LI LU MC NL PT RO SE SI SK TR
Designated Extension States:
AL LT LV MK

(30) Priority: 31.01.2003 JP 2003023841
20.02.2003 JP 2003043104
24.03.2003 JP 2003080974
15.04.2003 JP 2003110406
20.05.2003 JP 2003142115

(71) Applicant: EBARA CORPORATION
Tokyo 144-8510 (JP)

(72) Inventors:
• SHIMAMURA, Kazuaki
2470061 (JP)
• TANAKA, Toshihiro, Central Wing West 1011,
Fujisawa-shi, Kanagawa 2510015 (JP)

(74) Representative: Emde, Eric
Wagner & Geyer,
Gewürzmühlstrasse 5
80538 München (DE)

(54) **METHOD AND APPARATUS FOR REMOVING ION IN FLUID BY CRYSTALLIZATION**

(57)     It is an object of the present invention to improve the phosphorus recovery rate in a method and apparatus for removing ions to be removed in a liquid to be treated by crystallizing out crystal particles of a poorly soluble salt of the ions to be removed in the liquid to be treated in a crystallization reaction tank. As one means for attaining this object, in one embodiment of the present invention there is provided a method for removing ions to be removed in a liquid to be treated by crystallizing out crystal particles of a poorly soluble salt of the ions to be removed in the liquid to be treated in a crystallization reaction tank, which comprises adding a chemical agent required for the crystallization reaction into a part of a treated liquid flowing out from the crystallization reaction tank and dissolving the chemical agent therein, and supplying the resulting solution into the crystallization reaction tank as a circulating liquid, wherein the liquid to be treated and the circulating liquid are introduced into the crystallization reaction tank tangentially to a transverse section of the crystallization reaction tank.

FIG. 1

**Description**

TECHNICAL FIELD

The present invention relates to a method and apparatus for removing or recovering specific ions from a liquid through a crystallization method, and in particular to a method and apparatus for subjecting phosphate ions, calcium ions, fluoride ions, carbonate ions, sulfate ions or the like contained in any of various liquids to chemical reaction to precipitate out crystals of a poorly soluble salt having a uniform particle size, thus stabilizing and efficiently removing these ions and obtaining product crystals having a stable nature. According to one preferable embodiment of the present invention, phosphorus can be physicochemically removed and recovered from wastewater containing high concentrations of nitrogen and phosphorus.

BACKGROUND ART

From hitherto, crystallization has been used as a method for removing specific ions from a liquid. The crystallization method is a method in which ions that react with specific ions contained in a liquid to be treated are added as a chemical agent to the liquid to be treated so as to form a poorly soluble salt, and the pH is changed to put the ions in the liquid to be treated into a supersaturated state, and hence crystals containing the specific ions are precipitated out and then removed.

Giving an example of the crystallization method, in the case of taking wastewater such as reject water from a sludge treatment system or secondary treated water from sewage as liquid to be treated and removing phosphate ions therefrom, it is possible to add calcium, and precipitate out crystals of calcium phosphate ($Ca_3(PO_4)_2$) or hydroxyapatite ($Ca_{10}(PO_4)_6(OH)_2$: HAP). Moreover, wastewater from a semiconductor plant often contains a large amount of fluoride ions; in the case of treating such wastewater, the fluorine in the wastewater can similarly be removed by adding a calcium source and precipitating out crystals of calcium fluoride ($CaF_2$). Furthermore, in the case of removing calcium ions from water seeped out from landfill, waste water, or water originating from ground water, crystals of calcium carbonate can be precipitated out by raising the pH and adding a carbonate source. Alternatively, by adding calcium ions to hard water containing a large amount of carbonate ions, crystals of calcium carbonate ($CaCO_3$) can similarly be precipitated out, and hence the hardness can be reduced. Moreover, Mn, which is an impurity in tap water, can be removed as manganese carbonate ($MnCO_3$) by adding carbonate ions. Furthermore, with wastewater containing phosphate ions and ammonium ions in such as wastewater from a fertilizer plant or filtrate from anaerobically digested sludge, crystals of magnesium ammonium phosphate ($MgNH_4PO_4$: MAP) can be precipitated out by adding magnesium.

For example, giving a description with the crystallization of MAP taken as an example, MAP is said to be produced upon magnesium, ammonium, phosphorus, and hydroxyl groups in a liquid undergoing a reaction of the following scheme.

$$Mg^{2+} + NH_4^+ + HPO_4^{2-} + OH^- + 6H_2O \rightarrow MgNH_4PO_4 \cdot 6H_2O \text{ (MAP) } +$$

$$H_2O$$

Regarding the conditions for producing the MAP, operation is carried out such that the value obtained by multiplying the molar concentrations of phosphorus, ammonia, magnesium and hydroxyl groups together (referred to as the 'ionic product': $[HPO_4^{2-}][NH_4^+][Mg^{2+}][OH^-]$; the units of each item in square brackets are mol/L) is at least the solubility product of the MAP. Moreover, if the ammonia and the magnesium in the water to be treated are made to be present in an equimolar amount or more compared with the phosphorus, then the phosphorus concentration can be further reduced.

It is efficient and thus preferable if the amount added of the magnesium is made to be approximately 1.2 as a molar ratio relative to the inflowing phosphorus. The magnesium added is generally in the form of magnesium chloride, magnesium hydroxide, magnesium oxide, magnesium sulfate, or dolomite.

Calcium phosphate (hydroxyapatite: HAP) is similarly produced by adding calcium ions to water to be treated and thus bringing about a reaction of the following form between the calcium ions, phosphorus and hydroxyl groups in the liquid.

$$10Ca^{2+} + 6PO_4^{3-} + 2OH^- \rightarrow Ca_{10}(PO_4)_6(OH)_2 \text{ (HAP)}$$

Among the various crystallization methods, in particular the MAP method and the HAP method described above have been widely studied as methods for removing nitrogen and phosphorus contained in wastewater.

Nitrogen and phosphorus contained in wastewater are substances that cause the problem of eutrophication in rivers, oceans, reservoirs and so on, and hence it is desirable for these to be removed efficiently in a water treatment process.

These days, as methods for treating sludge produced from a wastewater treatment process, there are a method in which the sludge is dehydrated and then incinerated and thus disposed of, and a method in which the sludge is anaerobically digested, and then dehydrated, and then disposed of by further drying, incinerating, melting or the like. The separated liquid (separated liquid from the dehydration) discharged from these treatment methods contains high concentrations of nitrogen (approximately 50 to 3000 mg/L) and phosphorus (approximately 100 to 600 mg%L), and if these flow back into the wastewater treatment system, then the nitrogen and phosphorus loads will become high, and hence it will not be possible to carry out the treatment completely, resulting in the nitrogen and phosphorus concentrations in the discharged water becoming high. A method for efficiently carrying out removal on wastewater containing high concentrations of nitrogen and phosphorus is thus desired.

Moreover, phosphorus resources are expected to be depleted during the 21st century. Japan relies on imports for most of its phosphorus, and hence currently a method for efficiently recovering phosphorus from organic waste and wastewater is desired.

Various methods for removing phosphorus from wastewater containing phosphorus have been developed, for example a biological removal method, a coagulative precipitation method, a crystallization method, and an adsorption method. There are merits and demerits in each of these treatment methods, but with the crystallization method, basically no sludge is produced, and the removed phosphorus can be reused easily, and moreover can be removed (recovered) in a stable state.

Such crystallization comprises a phenomenon of nucleation accompanied by formation of crystal nuclei, and a phenomenon of growth in which the nuclei increase in size. Nuclei that have just been formed have a small particle diameter, and hence the settling rate thereof is low; the surface loading must thus be reduced, and hence the reactor must be made large. On the other hand, nuclei that have grown to some extent have a sufficient settling rate, and hence the volume of the reactor can be reduced.

As methods for removing or recovering phosphorus in wastewater using the crystallization method, as described above, there have been developed the HAP method in which the phosphorus is recovered as hydroxyapatite, and the MAP method in which the phosphorus is recovered as magnesium ammonium phosphate.

For the method in which phosphorus in water to be treated is removed by crystallization as magnesium ammonium phosphate, there has been proposed a two-stage dephosphorization method giving an increased MAP recovery rate that involves adding a magnesium component, an alkali component, and in some cases water to be treated to a liquid in a secondary treatment tank that has flowed out from an upper portion of an ascending flow type primary treatment tank provided with means for introducing the water to be treated, carrying out reaction and solid-liquid separation, and then feeding sludge slurry accumulated in the solid-liquid separation zone at the bottom of the secondary treatment tank back into a lower mixing crystallization zone of the primary treatment tank (Japanese Patent Publication JP-A-2002-126761).

Moreover, for a removal method in which phosphorus in water to be treated is crystallized on the surfaces of magnesium ammonium phosphate (MAP) particles fluidized in a reaction tank, there has been proposed a dephosphorization method in which fine MAP crystals precipitated in the reaction tank are recovered in a solid-liquid separation tank, the recovered fine MAP crystals are grown by adding thereto raw water and magnesium, and if necessary an alkali component, in an ageing tank, and the grown MAP particles are fed back into a lower portion of the reaction tank and taken as the MAP particles in the reaction tank (Japanese Patent Publication JP-A-2002-326089).

With a fluidized layer reactor, raw water and circulating water are passed in as an ascending flow at a rate such that crystals in the reactor do not flow out from the reactor. As a result, a fluidized layer of crystal particles is formed in the reactor, and growth of the crystal particles is promoted here. As described above, crystallization comprises a nucleation phenomenon and a growth phenomenon; in the case of a fluidized layer reactor, by setting the operating conditions such that only the crystal growth phenomenon occurs in the reactor, the substance to be crystallized can be recovered without forming minute nuclei. Through such operation, it becomes possible to make the volume of the reactor smaller. Here, to make only the crystal growth phenomenon occur with no nucleation, operation should be carried out in a metastable zone such that a highly supersaturated state is not formed. Moreover, MAP particles that grow excessively will have a very high settling rate, bringing about a drop in the recovery rate due to the crystal fluidizing becoming poor, the surface area contributing to reaction getting smaller, and so on. It is thus preferable to carry out the operation such that the MAP particle diameter in the reactor does not become either too large or too small.

The phosphorus recovery rate for MAP crystallization using a fluidized layer reactor is thus greatly affected by (1) the fluidizing of the MAP crystals in the reactor, (2) the mixing together of the substances involved in the crystallization reaction (phosphorus, ammonia nitrogen, magnesium, alkali), and (3) the state of contact between the crystals in the reactor and the substances involved in the crystallization reaction. Until now, these three points have not been sufficiently studied. As a result, there have been problems such as a drop in the phosphorus recovery rate due to fine nuclei being formed through production of local supersaturation, a drop in the phosphorus recovery rate due to ununiform fluidizing of the crystals and formation of places where the crystals are immobile (resulting in an increase in the phosphorus load per unit crystal packing volume), and a drop in the phosphorus recovery rate due to nucleation other than on the crystal surfaces due to a short path (shortcut) of the raw water and the circulating water, and the chemical agent.

It is thus an object of the present invention to provide art for recovering and removing ions in a liquid by a crystallization method according to which the above problems are solved and a high recovery rate (at least 90%) can be maintained. The present inventors investigated the above three points over a long period using a large-scale experimental plant, and as a result accomplished the present invention based on the discovery that the problem of the phosphorus recovery rate dropping as described above can be solved by making the fluidizing of the substances involved in the reaction in the reactor uniform. Specifically, according to the present invention, when adding a chemical agent required for the crystallization reaction to the reaction system, a part of the treated water discharged from the crystallization reaction tank is branched off, the chemical agent is added thereto and dissolved therein, and then the resulting solution is supplied into the crystallization reaction tank as circulating water, and moreover the circulating water and the water to be treated are introduced into the crystallization reaction tank tangentially to a transverse section of the crystallization reaction tank, whereby the fluidizing of the substances involved in the reaction in the crystallization reaction tank can be made uniform, and hence the water to be treated and the chemical agent can be mixed together thoroughly and uniformly, and thus the recovery rate of the ions to be removed can be greatly increased.

DISCLOSURE OF THE INVENTION

That is, a first embodiment of the present invention relates to a method for removing ions to be removed in a liquid to be treated by crystallizing out crystal particles of a poorly soluble salt of the ions to be removed in the liquid to be treated in a crystallization reaction tank, which comprises adding a chemical agent required for the crystallization reaction into a part of a treated liquid flowing out from the crystallization reaction tank and dissolving the chemical agent therein, and supplying the resulting solution into the crystallization reaction tank as a circulating liquid, wherein the liquid to be treated and the circulating liquid are introduced into the crystallization reaction tank tangentially to a transverse section of the crystallization reaction tank. Here, the 'chemical agent required for the crystallization reaction' is, for example, an Mg compound in the case of a method for removing phosphorus in a liquid by crystallizing out MAP, a Ca compound in the case of a method for removing phosphorus in a liquid by crystallizing out HAP, or an alkali in the case of a method for removing calcium in a liquid as calcium carbonate by raising the pH. The 'chemical agent required for the crystallization reaction' for various other crystallization reactions would be obvious to a person skilled in the art.

Moreover, in the first embodiment of the present invention, by supplying, i.e. bubbling, air near to a central portion of the transverse section of the crystallization reaction tank, the mixing together of the water to be treated and the chemical agent in the reaction tank can be further promoted. In particular, in the case that the reaction tank is a vessel having a large diameter, when the liquid to be treated and the circulating liquid are supplied tangentially into the transverse section, the liquid flow will be strong near to the circumference of the tank, but will be poor near to the central portion of the transverse section of the tank, and hence it may no longer be possible for the mixing to be carried out thoroughly. By agitating by supplying air (bubbles) into the central portion of the transverse section of the tank, the mixing of the liquid in the tank can thus be carried out more thoroughly.

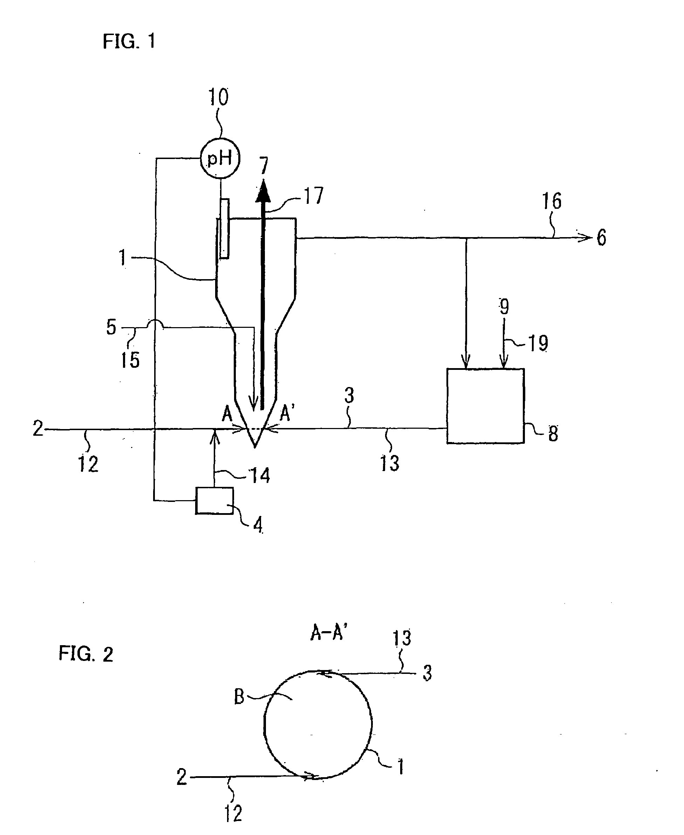

Moreover, it is possible to use a reaction vessel of a shape in which the transverse section of a lower portion is smaller than the transverse section of an upper portion as the crystallization reaction tank, and introduce the liquid to be treated and the circulating liquid into the lower portion of the reaction tank. In the case of using a vessel having a large diameter as the reaction tank, before the liquid to be treated and the circulating liquid can mix with another sufficiently, each of the liquid to be treated and the circulating liquid may form an ascending flow in the tank and thus flow upward, whereby the state of mixing may become poor. By making the reaction tank have a shape in which a lower portion has a smaller transverse section than an upper portion, i.e. by making the lower portion of the reaction tank be narrower than the upper portion, and supplying the liquid to be treated and the circulating liquid into this narrowed portion, the liquid to be treated and the circulating liquid introduced in can thus be thoroughly mixed together before forming an ascending flow. For example, a reaction vessel having a stepped cylindrical shape in which the lower portion of the tank has a smaller diameter than the upper portion can be used as the crystallization reaction tank. Moreover, a reaction vessel of a shape in which the lower portion of the tank becomes gradually smaller in diameter in steps can be used. Furthermore, as shown by reference numeral '1' in FIG. 1, a reaction vessel in which a lowermost portion of the tank has an inverted conical shape can be used.

BRIEF DESCRIPTION OF THE DRAWINGS

FIG. 1 is an explanatory longitudinal sectional view showing a specific example of a crystallization reaction apparatus according to a first embodiment of the present invention.
FIG. 2 is a transverse sectional view through plane A-A' of an inverted conical portion of the crystallization reaction apparatus in FIG. 1.
FIG. 3 is a perspective view of plane A-A' in FIG. 1.
FIG. 4 is a view showing the method for supplying in raw water and circulating water in Comparative Example 1.
FIG. 5 is a view showing an example of the constitution of a phosphorus recovering apparatus of a preferable embodiment of the present invention.
FIG. 6 is a horizontal sectional view through the plane of line A-A' of the crystallization reaction tank in FIG. 5.
FIG. 7 is a view showing the constitution of a phosphorus recovering apparatus used in Example 3.
FIG. 8 is a transverse sectional view through plane A-A' of an inverted conical portion of the crystallization reaction apparatus in FIG. 7.
FIG. 9 is a view showing the constitution of a phosphorus recovering apparatus used in Comparative Example 3.
FIG. 10 is a view showing the method for supplying in raw water and circulating water in Comparative Example 3.
FIG. 11 is a view showing a specific example of a crystallization reaction apparatus according to a second embodiment of the present invention.
FIG. 12 is a view showing the constitution of a phosphorus recovering apparatus according to a preferable embodiment of the present invention in which consideration is given to the water level balance between raw water and circulating water.
FIG. 13 is a partial enlarged view of an upper portion of a crystallization reaction tank in FIG. 12 for explaining the water level balance in detail.
FIG. 14 is a view showing the constitution of a phosphorus recovering apparatus used in Comparative Example 4.
FIG. 15 is a view showing the constitution of a phosphorus recovering apparatus of a preferable embodiment of the present invention.
FIG. 16 is a view showing the constitution of a phosphorus recovering apparatus according to a preferable embodiment of the present invention in which consideration is given to the water level balance between raw water and circulating water.
FIG. 17 is a partial enlarged view of an upper portion of a crystallization reaction tank in FIG. 16 for explaining the water level balance in detail.
FIG. 18 is a view showing the constitution of a phosphorus recovering apparatus used in Comparative Example 5.
FIG. 19 is a view showing the constitution of a phosphorus recovering apparatus used in Comparative Example 6.
FIG. 20 is a view showing the constitution of a phosphorus recovering apparatus according to a third embodiment of the present invention.
FIG. 21 is a view showing the constitution of a phosphorus recovering apparatus according to the third embodiment of the present invention provided with a chemical adjustment tank.
FIG. 22 is a view showing the constitution of a phosphorus recovering apparatus according to the third embodiment of the present invention in which pH adjustment is carried out in two stages.
FIG. 23 is a view showing the constitution of a phosphorus recovering apparatus used in Example 9.
FIG. 24 is a view showing the constitution of a phosphorus recovering apparatus used in Comparative Example 7.
FIG. 25 is a graph showing the pH dependence of the solubility of magnesium hydroxide.

DETAILED DESCRIPTION OF THE INVENTION

A specific example of a method according to a first embodiment of the present invention will now be described with reference to the drawings. In the following, a specific example of the first embodiment of the present invention will be described; however, the present invention is not limited by this description. Moreover, in the following, as the specific example, a method and apparatus for removing and recovering phosphorus from water to be treated containing phosphorus by producing crystals of magnesium ammonium phosphate (MAP) will be described. In the description of the drawings below, constituent elements having the same function will be represented by the same reference numeral. Moreover, in the description of the drawings, description of constituent elements having the same function will be omitted as appropriate.

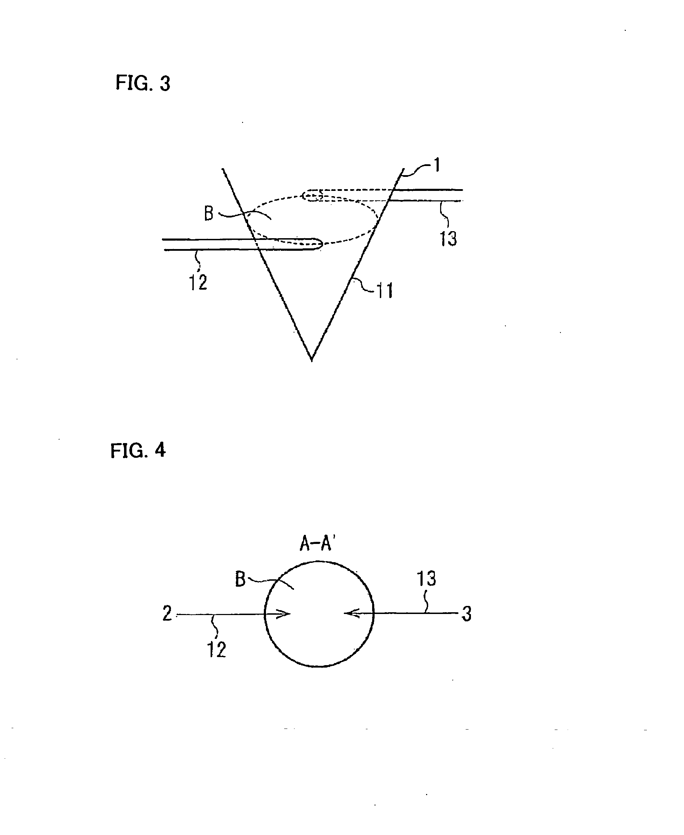

FIG. 1 is an explanatory longitudinal sectional view showing a specific example of a crystallization reaction apparatus according to the first embodiment of the present invention. FIG. 2 is a transverse sectional view through plane A-A' of an inverted conical portion of the crystallization reaction apparatus in FIG. 1. FIG. 3 is a perspective view of plane A-A' in FIG. 1.

In the specific example shown in FIG. 1, there is shown a process in which phosphorus is removed and recovered from raw water containing phosphorus by producing MAP crystals. There are no particular limitations on the shape of a crystallization reaction tank 1, but as a preferable form, as shown in FIG. 1, there may be used a two-stage cylindrical reaction vessel having a lower portion thereof narrower than an upper portion thereof, wherein a lowermost portion is further made to have an inverted conical shape. The crystallization reaction tank 1 has connected thereto a raw water supply pipe 12, a circulating water supply pipe 13, a treated water outflow pipe 16, and a crystal withdrawal pipe 17. Furthermore, as necessary the crystallization reaction tank 1 may have connected thereto an alkali supply pipe 14, and an air supply pipe 15.

The raw water supply pipe 12 and the circulating water supply pipe 13 are connected to a portion 11 where the lower portion of the crystallization reaction tank 1 is given an inverted conical shape, and the raw water 2, and the circulating water 3 which is obtained by drawing off a part of the treated water 6 are introduced therethrough. The circulating water 3 is obtained by branching off a part of the treated water, and adding thereto and dissolving therein an Mg compound as an Mg ion source. As shown in FIG. 1, to add and dissolve the Mg compound in the circulating water, a part of the treated water may be temporarily stored in an Mg-dissolving tank 8, and the Mg compound 9 may be added thereto from an Mg supply pipe 19 and thus dissolved therein. By supplying the raw water, and the circulating water having Mg ions dissolved therein into the crystallization reaction tank 1, an ascending flow is produced in the crystallization reaction tank 1, and hence a fluidized layer of MAP crystal particles is formed, and reaction between Mg ions and phosphorus in the liquid proceeds on the surfaces of the MAP crystal particles, and hence the MAP crystal particles grow.

As shown in FIG. 2, which is a transverse sectional view of the inverted conical portion, and FIG. 3, which is a perspective view of the inverted conical portion, the raw water supply pipe 12 and the circulating water supply pipe 13 are connected such that the directions of passing in the raw water and the circulating water are tangential to a transverse section B of the crystallization reaction tank 1. By connecting the raw water supply pipe 12 and the circulating water supply pipe 13 such as to be tangential to the transverse section of the crystallization reaction tank, a vortex due to the raw water and the circulating water is formed through the force of the liquid flows produced through the raw water 2 and the circulating water 3 being supplied in, whereby the liquid and the crystal particles in the crystallization reaction tank are fluidized uniformly. Here, uniform fluidizing means a state of fluidizing in which dead zones where the liquid and the crystal particles are not fluidized are not formed in the crystallization reaction tank. By attaining such a state of uniform fluidizing, the mixing together of the substances involved in the crystallization reaction, and the contact between these involved substances and the crystal surfaces become very good.

The present inventors studied the time taken for the rate of the flow of the raw water 2 and the circulating water 3 in the horizontal direction to be lost so that the liquid flow becomes an ascending flow under the presence of crystal particles of size 0.2 to 1.0 mm, and as a result ascertained that this time is approximately 0.1 to 0.3 seconds. Consequently, if the flow rate for 1 second (m/s) of the flow of the raw water 2 and the flow of the circulating water 3 combined is at least 3 to 10 times the circumference of the transverse section B at the site where the raw water and circulating water supply pipes 12 and 13 are connected, then all of the crystal particles at the transverse section at the site where the raw water and the circulating water are introduced will be fluidized uniformly. As a result, all of the crystal particles in the reaction tank 1 can contribute to the crystallization reaction, and hence the crystallization reaction is promoted.

Furthermore, as a result of introducing in the raw water 2 and the circulating water 3 tangentially, the liquid rises in a swirl flow, and hence the reaction time is increased, and thus reaction can be carried out until the reaction environment reaches a sufficiently low degree of supersaturation.

If the raw water 2 and the circulating water 3 are supplied tangentially, then with a crystallization reaction tank 1 having a large diameter, the fluidizing near to the side of the crystallization reaction tank 1, i.e. near to the circumference, will be good, but the fluidizing in a central portion of the crystallization reaction tank may be poor. In such a case, it is thus preferable to connect an air supply pipe 15 at the central portion of the transverse section of the crystallization reaction tank 1 and supply in air 5 therefrom, thus promoting mixing of the liquid in the crystallization reaction tank. The air supply pipe 15, in particular the lower end thereof, may be in any position, but is preferably positioned in the fluidized layer of the crystal particles. Furthermore, it is preferable to position the lower end of the air supply pipe at least above the position where the raw water and circulating water supply pipes 12 and 13 are connected so as not to impede the swirl flow of the liquid.

The supply pipe 19 for the magnesium compound 9 is connected to a circulating water 3 line into which a part of the treated water 6 from the crystallization reaction tank 1 is branched off. By supplying the magnesium compound 9 into the circulating water 3 line, even in the case of adding a high-concentration magnesium compound stock liquid, this can be supplied into the crystallization reaction tank 1 after having been diluted to a sufficiently low concentration by the circulating water 3, and hence a local highly supersaturated state can be prevented from being formed in the crystallization reaction tank 1.

The position at which the magnesium compound 9 is supplied in may be inside the circulating water piping 13, or may be inside the tank (Mg-dissolving tank) 8 in which the circulating water 3 is temporarily stored. The magnesium compound 9 added may be in an ionic form, or may be in the form of a compound; specifically, magnesium chloride, magnesium hydroxide, magnesium oxide, magnesium sulfate, or the like can be used.

Moreover, it is preferable to measure the pH inside the crystallization reaction tank 1 using a pH meter 10, and add an alkali 4 as required via an alkali supply pipe 14 so as to maintain the reaction environment at a suitable pH. The alkali 4 can be supplied into the raw water 2 or the crystallization reaction tank 1. In the case of supplying the alkali into the raw water 2, the site of the addition may be in a raw water tank or in the raw water supply pipe 12. In the case of supplying the alkali into the crystallization reaction tank 1, it is preferable to supply in the alkali near to the position of supplying in the raw water 2 and/or the circulating water 3. In this case, the alkali will be diluted by the raw water upon flowing into the crystallization reaction tank 1, and hence a local supersaturated state can be prevented from forming in the crystallization reaction tank 1. Caustic soda, magnesium hydroxide, calcium hydroxide, or the like can be used as the alkali 4. The addition of the alkali 4 can be carried out by operating with any of various control methods such as proportional control or on/off control of an alkali injecting pump in accordance with the pH value measured inside the crystallization reaction tank 1 so as to achieve the desired pH value. Regarding the desired pH, the set value is preferably varied in accordance with the ammonia concentration, the phosphorus concentration, the magnesium concentration and so on in the raw water, for example it is preferable to vary the set value in accordance with the type of the raw water and concentration variations, for example to pH 7.0 to 8.0 in the case of treating raw water having an ammonia concentration of more than 1000 mg/L, and pH 8.0 to 9.5 in the case of treating raw water having an ammonia concentration of less than 300 mg/L.

As the method for withdrawing MAP product crystals 7 that have grown in the crystallization reaction tank 1, there is a method in which the MAP product crystals 7 are withdrawn by opening and closing a valve in the bottom of the crystallization reaction tank 1, but there have been many problems due to such a valve becoming blocked. In the embodiment of the present invention shown in FIG. 1, problems such as valve blockage are eliminated by using an air lift pump 17, whereby the crystals can be withdrawn well.

Here, the 'air lift pump' is a device in which air is blown into a lower end portion of a pipe (an air lift pipe) installed such that the lower end thereof is disposed in the liquid in a water tank and the upper end thereof is disposed above the liquid surface, whereby the apparent specific gravity of the liquid having air bubbles mixed therein in the air lift pipe (liquid lifting pipe) becomes lower than the specific gravity of the liquid outside the pipe, and hence the liquid surface in the liquid lifting pipe rises relative to the liquid surface in the water tank, whereby the liquid inside the water tank can be lifted above the liquid surface in the water tank; such an air lift pump is widely used in fields such as discharging settled sludge from a septic tank, discharging sludge from a settling basin, and transporting solid matter from the deep ocean floor.

As described above, the crystal particles in the crystallization reaction tank 1 are fluidized uniformly, and in particular the state of fluidizing is very good near to the site where the raw water and circulating water supply pipes 12 and 13 are connected. The magnesium compound 9 and the alkali 4 are supplied into such a place where the state of fluidizing is good, and hence undergo thorough mixing instantly, whereby a metastable region in which nucleation does not occur is formed instantly. Moreover, because the crystal particles are fluidized uniformly, the efficiency of contact between the substances involved in the crystallization reaction and the crystal particles is good, and hence the crystallization reaction involving mainly the crystal particle growth process is promoted.

Note that in the case of the first embodiment of the present invention described above, it may be made such that a seed crystal production tank is provided in addition to the crystallization reaction tank, fine crystal particles contained in the liquid in the crystallization reaction tank are taken out and supplied into the seed crystal production tank, and are grown in the seed crystal production tank to form seed crystals, and then the grown seed crystals are returned into the crystallization reaction tank. By adopting such a constitution, fine crystal particles produced in the crystallization reaction tank can be prevented from being discharged in the treated water, and hence the removal/recovery rate for the ions to be removed can be improved.

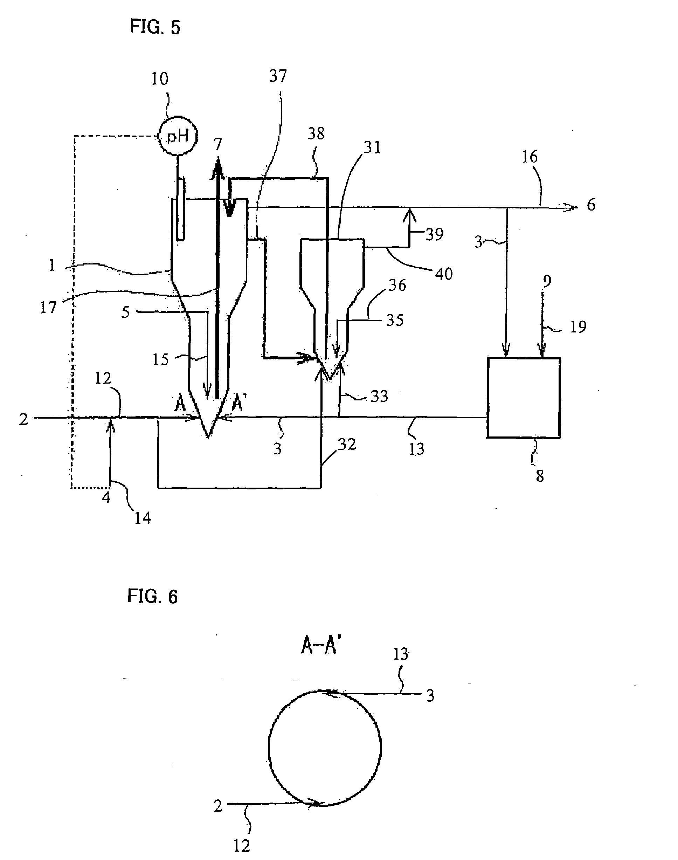

In this embodiment, in the seed crystal production tank, it is possible to supply air near to a central portion of a transverse section of the seed crystal production tank as described earlier for the crystallization reaction tank, whereby the mixing between the liquid and the crystal particles in the seed crystal production tank can be promoted. Moreover, as the seed crystal production tank, as for the crystallization reaction tank, it is possible to use a reaction vessel of a shape in which the transverse section of a lower portion is smaller than the transverse section of an upper portion, the liquid to be treated and the circulating liquid being introduced into the lower portion of this reaction tank. Furthermore, it is possible to use, as the seed crystal production tank, a reaction vessel of a shape in which the lower portion of the tank becomes gradually smaller in diameter in steps, or as shown by reference numeral '31' in FIG. 5, a reaction vessel in which the lowermost portion of the tank has an inverted conical shape.

A specific example of this embodiment will be described below with reference to the drawings. As with FIGS. 1 to 3, in the following description, as the specific example, a method and apparatus for removing and recovering phosphorus from water to be treated containing phosphorus by producing crystals of magnesium ammonium phosphate (MAP) will be described. Moreover, in the drawings, constituent elements having the same function will be represented by the same reference numeral, and description thereof will be omitted as appropriate.

FIG. 5 shows an example of the constitution of a phosphorus recovering apparatus of the preferable embodiment of the present invention described above. FIG. 6 is a transverse sectional view through the plane of line A-A' of the crystallization reaction tank in FIG. 5.

The crystallization reaction apparatus shown in FIG. 5 comprises a crystallization reaction tank 1 and a seed crystal production tank 31.

Regarding the seed crystal production tank 31, so that seed crystals can be produced efficiently, fine MAP crystals are recovered using a fine crystal recovering apparatus (omitted from the drawings) from the upper portion of the crystallization reaction tank 1 or from the water flowing out from the crystallization reaction tank 1, the recovered fine MAP is transferred into the seed crystal production tank 31 by a fine crystal transfer pipe 37, and the fine MAP crystal particles are grown in the seed crystal production tank 31 to produce seed crystals. Any of various recovering apparatuses publicly known in the technical field in question can be used as the fine crystal recovering apparatus, for example a liquid cyclone, a simple precipitation tank, or the like.

The raw water 2, and the circulating water 3 to which the Mg compound has been added, are supplied into the seed crystal production tank 31, whereby the substances involved in the crystallization reaction are subjected to crystallization on the surfaces of the fine MAP crystal particles so that the fine MAP crystal particles grow. The raw water can be supplied into the seed crystal production tank 31 by a branch pipe 32 of the raw water supply pipe 12 that leads into the crystallization reaction tank 1, and the circulating water can be supplied into the seed crystal production tank 31 by a branch pipe 33 of the circulating water supply pipe 13 that leads into the crystallization reaction tank 1. The grown seed crystals can be fed back into the crystallization reaction tank 1 at suitable times. The feeding back of the grown seed crystals into the crystallization reaction tank 1 can be carried out, for example, using an air lift pipe 38. The feeding back of the grown seed crystals may be carried out intermittently or continuously. The frequency of feeding back the grown seed crystals and the amount of the grown seed crystals fed back are set such that the mean particle diameter of the crystal particles in the crystallization reaction tank 1 is a desired value. For example, assuming that 80 kg of MAP product crystals of mean particle diameter 0.6 mm are withdrawn out from the crystallization reaction tank 1 per day, 10 kg per day (kg/d) of seed crystals of mean particle diameter 0.3 mm (1/2 the particle diameter, i.e. 1/8 the volume, of the product crystal particles), or 30 kg of seed crystals of mean particle diameter 0.3 mm once every three days, can be fed back from the seed crystal production tank 31 into the crystallization reaction tank 1. As shown in FIG. 5, a discharge pipe 40 for outflow water 39 from the seed crystal production tank 31 can be connected to the discharge pipe 16 for the outflow water 6 from the crystallization reaction tank 1.

As described earlier, the seed crystals are further grown in the crystallization reaction tank 1. As with the seed crystal production tank 31, the raw water 2, and the circulating water 3 containing the Mg compound are supplied into the crystallization reaction tank 1, whereby the substances involved in the crystallization reaction can be subjected to crystallization on the surfaces of the seed crystals so that the seed crystals grow. A part of the crystal particles grown from the seed crystals can be withdrawn at suitable times as product crystals 7. As the method for withdrawing the crystal particles, there is a method in which the crystal particles are withdrawn by opening and closing a valve in the bottom of the crystallization reaction tank 1, but there have been many problems due to such a valve becoming blocked. In the embodiment shown in FIG. 5, problems such as valve blockage are eliminated by using an air lift pump 17, whereby the product crystals can be withdrawn well.

Following is a more detailed description of the tanks.

There are no particular limitations on the shape of the seed crystal production tank 31 and/or the crystallization reaction tank 1, but as a preferable form, as shown in FIG. 5, there may be used a fluidized layer type reaction vessel wherein a lowermost portion thereof is made to have an inverted conical shape. The reaction tanks can have connected thereto as required a supply pipe 12 or 32 for the raw water 2, a supply pipe 13 or 33 for the circulating water, a supply pipe 14 for an alkali 4, an outflow pipe 16 for the treated water 6, a supply pipe 15 or 36 for air 5 or 35, a fine MAP crystal transfer pipe 37, a product crystal withdrawal pipe 17, and a seed crystal transfer pipe 38.

The raw water 2, and the circulating water 3 which is obtained by drawing off a part of the treated water 6 and adding the magnesium compound 9 thereto are supplied into the inverted conical portion at the bottom of the crystallization reaction tank 1. As shown in FIG. 6, the raw water supply pipe 12 and the circulating water supply pipe 13 are connected to the crystallization reaction tank 1 such that the directions of passing in the raw water and the circulating water are tangential to a transverse section of the crystallization reaction tank 1. By connecting the raw water supply pipe 12 and the circulating water supply pipe 13 such as to be tangential to the transverse section of the crystallization reaction tank, a vortex due to the raw water and the circulating water is formed through the force of the liquid flows produced through the raw water 2 and the circulating water 3 being supplied in, whereby the liquid and the crystal particles in the crystallization reaction tank are fluidized uniformly. Here, uniform fluidizing means a state of flow in which dead zones where the liquid and the crystal particles are not fluidized are not formed in the crystallization reaction tank. By attaining such a state of uniform fluidizing, the mixing together of the substances involved in the crystallization reaction, and the contact between these involved substances and the crystal surfaces become very good.

The present inventors studied the time taken for the rate of the flow of the raw water 2 and the circulating water 3 in the horizontal direction to be lost so that the liquid flow becomes an ascending flow under the presence of crystal particles of size 0.2 to 1.0 mm, and as a result ascertained that this time is approximately 0.1 to 0.3 seconds. Consequently, if the flow rate for 1 second (m/s) of the flow of the raw water 2 and the flow of the circulating water 3 combined is at least 3 to 10 times the circumference of the transverse section at the site where the raw water and circulating water supply pipes 12 and 13 are connected, then all of the crystal particles at the transverse section at the site where the raw water and the circulating water are introduced will be fluidized uniformly. As a result, all of the crystal particles in the reaction tank can contribute to the crystallization reaction, and hence the crystallization reaction is promoted.

Furthermore, as a result of introducing in the raw water 2 and the circulating water 3 tangentially, the liquid rises through the crystallization reaction tank 1 in a swirl flow, and hence the reaction time is increased, and thus reaction can be carried out until the reaction environment reaches a sufficiently low degree of supersaturation.

If the raw water 2 and the circulating water 3 are supplied in tangentially, then with a reaction tank having a large diameter, the fluidizing near to the inside surface of the reaction tank wall will be good, but the fluidizing in a central portion of the reaction tank may be poor. In such a case, it is thus preferable to connect an air supply pipe 15 at the central portion of the transverse section of the crystallization reaction tank 1 and supply in air 5 therefrom, thus promoting mixing of the liquid in the crystallization reaction tank. The air supply pipe 15, in particular the lower end thereof, may be in any position, but is preferably positioned in the fluidized layer of the crystal particles. Furthermore, it is preferable to position the lower end of the air supply pipe 15 at least above the position where the raw water and circulating water supply pipes 12 and 13 are connected so as not to impede the swirl flow of the liquid.

The supply pipe 19 for the magnesium compound is connected to a circulating water 3 line into which a part of the treated water from the reaction tank is branched off. By supplying the magnesium compound 9 into the circulating water 3 line, even in the case of adding a high-concentration magnesium compound stock liquid, this can be supplied into the reaction tank after having been diluted to a sufficiently low concentration by the circulating water 3, and hence a local highly supersaturated state can be prevented from being formed in the reaction tank.

The position at which the magnesium compound 9 is supplied in may be inside the circulating water piping 13, or may be inside the tank 8 in which the circulating water 3 is temporarily stored. The magnesium compound 9 added may be in an ionic form, or may be in the form of a compound; specifically, magnesium chloride, magnesium hydroxide, magnesium oxide, magnesium sulfate, or the like can be used.

Moreover, it is preferable to measure the pH inside the crystallization reaction tank 1 using a pH meter 10, and add an alkali 4 as required so as to maintain the reaction environment at a suitable pH. The alkali 4 can be supplied into the raw water 2 or the crystallization reaction tank 1. In the case of supplying the alkali 4 into the raw water 2, the site of the addition may be in a raw water tank or in the raw water supply pipe 12. In the case of supplying the alkali 4 into the crystallization reaction tank 1, it is preferable to supply in the alkali 4 near to the position of supplying in the raw water 2 and/or the circulating water 3. In this case, the alkali 4 will be diluted by the raw water upon flowing into the crystallization reaction tank 1, and hence a local supersaturated state can be prevented from forming in the crystallization reaction tank 1. Caustic soda, magnesium hydroxide, calcium hydroxide, or the like can be used as the alkali 4. The addition of the alkali 4 can be carried out by operating with any of various control methods such as proportional control or on/off control of an alkali injecting pump (not shown in the drawings) in accordance with the pH value measured inside the crystallization reaction tank 1 so as to achieve the desired pH value. Regarding the desired pH, the set value is preferably varied in accordance with the ammonia concentration, the phosphorus concentration, the magnesium concentration and so on in the raw water, for example it is preferable to vary the set value in accordance with the type of the raw water and concentration variations, for example to pH 7.0 to 8.0 in the case of treating raw water having an ammonia concentration of more than, or equal to 1000 mg/L, and pH 8.0 to 9.5 in the case of treating raw water having an ammonia concentration of less than, or equal to 300 mg/L.

As described above, the crystal particles in the crystallization reaction tank 1 are fluidized uniformly, and in particular the state of fluidizing is very good near to the site where the raw water supply pipe 12 and the circulating water supply pipe 13 are connected. The magnesium compound 9 and the alkali 4 are supplied into such a place where the state of fluidizing is good, and hence undergo thorough mixing instantly, whereby a metastable region in which nucleation does not occur is formed instantly. Moreover, because the crystal particles are fluidized uniformly, the efficiency of contact between the substances involved in the crystallization reaction and the crystal particles is good, and hence the crystallization reaction involving mainly the growth process is promoted.

In the embodiment shown in FIG. 5, the same constitution as for the crystallization reaction tank 1 described above can also be adopted for the seed crystal production tank 31. That is, for the seed crystal production tank 31, the liquid to be treated and the circulating water can be introduced tangentially into a transverse section of the seed crystal production tank, and air can further be supplied into a central portion of the transverse section of the seed crystal production tank. Furthermore, as the seed crystal production tank 31, a reaction vessel of a shape in which the transverse section of a lower portion is smaller than the transverse section of an upper portion can be used, and furthermore a reaction vessel in which the lowermost portion has an inverted conical shape can be used.

Moreover, with a crystallization reaction apparatus, there has been a problem of fine crystals produced in the reaction tank being discharged in the treated liquid.

To solve this problem, there have been proposed granulating dephosphorization apparatuses wherein a MAP granulating tower is provided with a liquid cyclone that separates out MAP solid particles from treated water having the MAP solid particles mixed therein supplied from a treated water supply pipe of the MAP granulating tower (Japanese Patent Publications JP-A- 8-155469, JP-A- 2001-9472). A problem in this case has been that the MAP particles recovered in the liquid cyclone have a very small diameter compared with the MAP particles recovered in the granulating dephosphorization apparatus, and hence dehydration such as draining has been difficult. Moreover, the treated water from the reactor is temporarily stored in a treated water tank before being force-fed into the liquid cyclone, and hence it has been difficult to obtain good water level balance.

Moreover, in Japanese Patent Publication JP-A- 2002-326089, there is proposed phosphorus removal means according to which fine crystals are grown in an ageing tank, and the grown crystals are used as seed crystals in a reaction tank, whereby phosphorus in water to be treated can be removed stably with a high removal rate.

With a fluidized layer reactor, the raw water and the circulating water are passed in as an ascending flow at a rate such that crystals in the reactor do not flow out from the reactor. As a result, a fluidized layer of crystal particles is formed in the reactor, and growth of the crystal particles is promoted here. As described earlier, crystallization comprises a nucleation phenomenon and a growth phenomenon; in the case of a fluidized layer reactor, by setting the operating conditions such that only the crystal growth phenomenon occurs in the reactor, the substance to be crystallized can be recovered without forming minute nuclei. Through such operation, it becomes possible to make the volume of the reactor smaller. Here, to make only the crystal growth phenomenon occur with no nucleation, operation should be carried out in a metastable region such that a highly supersaturated state is not formed.

However, in actual practice, fine crystals are produced and flow out to a not insignificant extent. In particular, there is marked formation of minute nuclei (a) in the case that there are concentration variations in the raw water, and hence a high degree of supersaturation is produced locally, (b) in the case that the phosphorus load per unit crystal packing volume increases due to ununiform fluidizing of the crystals and formation of places where the crystals are immobile, and (c) in the case of a short path (shortcut) of the raw water and the circulating water, and the chemical agent. Hitherto, the surface loading of the upper portion of the reactor has been reduced to prevent such flowing out of fine crystals. In particular, separating out of the fine crystals through the crystallization reaction is the main thing in the upper portion of the reactor, and there have been problems that if the amount of treated water becomes high, then, for example, the apparatus must be made large in size, the initial cost increases, and operation of the apparatus becomes difficult.

In another embodiment of the present invention, it is thus an object to provide a method and apparatus for recovering phosphorus according to which the above problems are solved and a high recovery rate (at least 90%) can be maintained.

The present inventors investigated the above three points over a long period using a large-scale experimental plant. As a result, the present inventors discovered that prevention of the flowing out of fine crystals as described above can be achieved by adding an Mg or Ca compound as a chemical agent required for the crystallization reaction to a part of the outflow water from a liquid cyclone, and then feeding this chemical agent-added liquid back into the crystallization reaction tank, whereby seed crystals grow, and only crystal growth occurs, with nucleation not being brought about.

Specifically, a second embodiment of the present invention relates to a method for removing ions to be removed in a liquid to be treated by crystallizing out crystal particles of a poorly soluble salt of the ions to be removed in the liquid to be treated in a crystallization reaction tank using an apparatus comprising the crystallization reaction tank and a liquid cyclone, which comprises introducing a treated liquid flowing out from the crystallization reaction tank into the liquid cyclone, separating out and recovering fine crystal particles in the treated liquid in the liquid cyclone, feeding a part or all of the recovered fine crystal particles back into the crystallization reaction tank, and moreover adding a chemical agent required for the crystallization reaction to a part of outflow water from the liquid cyclone and dissolving the chemical agent therein, and supplying the resulting solution into the crystallization reaction tank as a circulating liquid.

That is, the most important point in the second embodiment of the present invention is that the chemical agent involved in the crystallization reaction is added into the circulating water fed back into the crystallization reaction tank from the liquid cyclone, and the fine crystals are grown completely in the crystallization reaction tank.

A specific example of an embodiment of the second embodiment of the present invention will now be described in detail with reference to the drawings. In the description of the drawings below, constituent elements having the same function as constituent elements in the drawings already described will be represented by the same reference numeral, and description thereof will be omitted as appropriate. Moreover, in the following, as the specific example, a method and apparatus for removing and recovering phosphorus from water to be treated containing phosphorus by producing crystals of magnesium ammonium phosphate (MAP) will be described.

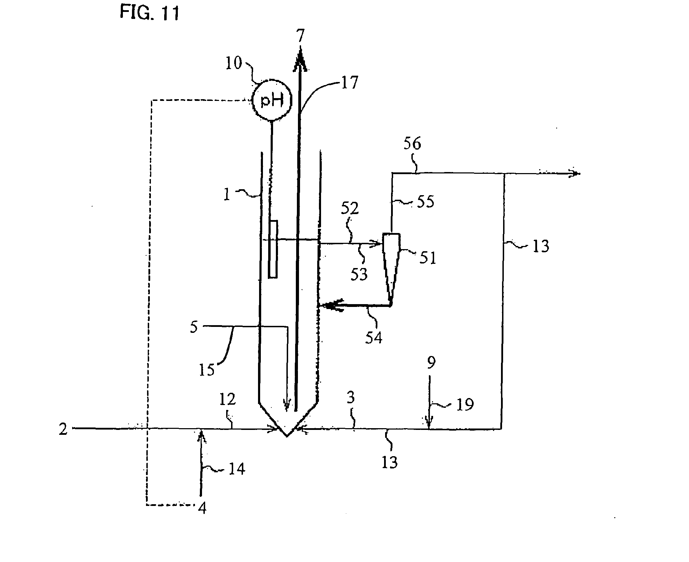

FIG. 11 shows a specific example of a crystallization reaction apparatus according to the second embodiment of the present invention. The crystallization reaction apparatus shown in FIG. 11 comprises a MAP crystallization reaction tank 1 and a liquid cyclone 51.

Seed crystals are grown in the MAP crystallization reaction tank 1. 'Seed crystals' here indicates particles having a surface on which MAP can be newly crystallized, and refers, for example, to MAP particles that have already been crystallized, and that has been added in from the outside, or particles obtained by coating sand or the like with product. There are no particular limitations on the shape of the MAP crystallization reaction tank 1, but in a preferable embodiment, this shape can be made to comprise a straight trunk portion with a lower portion thereof having an inverted conical shape as shown in FIG. 11. The MAP crystallization reaction tank 1 has connected thereto a raw water supply pipe 12 and a circulating water supply pipe 13, a treated water transfer pipe 52, and a withdrawal pipe 17 for product crystals 7. The treated water transfer pipe 52 is preferably connected in a position higher than the position where a fluidized layer of MAP crystal particles is formed in the MAP crystallization reaction tank 1, but below the liquid surface in the MAP crystallization reaction tank 1. In the case that the raw water has a high SS, or the case that one wishes to promote fluidizing of the crystal particles in the crystallization reaction tank, air 5 can further be supplied into the MAP crystallization reaction tank 1 via an air supply pipe 15. The position at which the air 5 is supplied in may be anywhere, but is preferably in the central portion of a transverse section rather than at the side of the crystallization reaction tank, and moreover a lower end portion of the air supply pipe 15 is preferably positioned in the fluidized layer of MAP crystal particles formed in the tank.

It is preferable to make the MAP crystallization reaction tank always have seed crystals therein so that the seed crystals will form a fluidized layer of at least a desired height.

The raw water 2, and circulating water 3 obtained by drawing off a part of the liquid cyclone outflow water 56, are supplied into the bottom of the crystallization reaction tank 1 (the inverted conical portion in FIG. 11). There are no particular limitations on the directions of passing in the raw water and the circulating water, but in a preferable form, the inflow pipes 12 and 13 are connected such as to be tangential to the transverse section of the crystallization reaction tank. By introducing the raw water 2 and the circulating water 3 in tangentially to the transverse section of the reaction tank, a vortex due to the raw water and the circulating water is formed through the liquid force produced through the raw water and the circulating water being supplied in, whereby the liquid and the crystal particles in the crystallization reaction tank 1 are fluidized uniformly. Here, uniform fluidizing means a state of fluidizing in which dead zones where the liquid and the crystal particles are not fluidized are not formed in the crystallization reaction tank. By attaining such a state of uniform fluidizing, the mixing together of the substances involved in the crystallization reaction, and the contact between these involved substances and the crystal surfaces become very good.

The chemical agent 9 required for the crystallization reaction, i.e. the magnesium compound in the case of a MAP crystallization apparatus, is added into the circulating water 3, which is a part of the outflow water from the liquid cyclone 51, via a chemical agent supply pipe 19, and then the circulating water 3 is supplied into the crystallization reaction tank 1. The phosphorus concentration in the outflow water 56 from the liquid cyclone 51 is reduced, and hence a supersaturated state is hardly produced even upon adding the magnesium compound, and thus there is very little production of MAP. Consequently, even in the case of a high-concentration magnesium compound stock liquid, by adopting the supply method described above, this can be supplied into the crystallization reaction tank 1 after having been diluted to a sufficiently low concentration by the circulating water, and hence a local highly supersaturated state can be prevented from being formed in the crystallization reaction tank 1. The phosphorus recovery rate can thus be prevented from dropping.

The magnesium compound added may be in an ionic form, or may be in the form of a compound; specifically, magnesium chloride, magnesium hydroxide, magnesium oxide, magnesium sulfate, or the like can be used.

A part of the crystal particles grown in the MAP crystallization reaction tank 1 can be withdrawn at suitable times so as to obtain product crystals 7. As the method for withdrawing the crystals, there is a method in which the crystals are withdrawn by opening and closing a valve in the bottom of the crystallization reaction tank 1, but there have been many problems due to such a valve becoming blocked. In the embodiment of the present invention shown in FIG. 11, problems such as valve blockage are eliminated by using an air lift pump 17, whereby the crystals can be withdrawn well. When the product crystal particles are withdrawn through such air lift, the supply of the agitating air 5 into the crystallization reaction tank 1 is stopped, and the crystals are graded, whereby MAP particles having a large particle diameter can be selectively recovered. After the air lift pump has been turned off, it is preferable to clean the inside of the air lift pipe. As the cleaning method, MAP crystal particles remaining in the air lift pipe are made to flow back into the reaction tank using water or air. By carrying out such cleaning of the air lift pipe, blockage of the air lift pipe can be prevented.

If the MAP crystal particles in the crystallization reaction tank 1 grow excessively, then the phosphorus recovery rate will drop. In this case, it is possible to withdraw all of the crystal particles contained in the tank, and newly add seed crystals having a small particle diameter, or add seed crystals that have been produced in a separate reaction tank at suitable times or continuously.

The liquid cyclone 51 generally has a conical lower portion; connected to the liquid cyclone 51 are the treated liquid transfer pipe 52, a concentrated solid discharge pipe 54 for the fine crystals, and a liquid cyclone outflow pipe 55. The concentrated solid discharge pipe 54 is connected to the MAP crystallization reaction tank 1. Moreover, the concentrated solid discharge pipe 54 may have thereon a discharge pipe for discharging concentrated solids to the outside.

As the method of passing the treated water into the liquid cyclone 51 from the MAP crystallization reaction tank 1, pump transfer, natural downflow, or the like can be adopted. With pump transfer, a pump (omitted from the drawing) is installed in the treated water transfer pipe 52, and the liquid in the crystallization reaction tank 1 is force-fed into the liquid cyclone 51 using this pump. The flow rate of the liquid transferred into the liquid cyclone 51 via the transfer pipe 52 can be set as appropriate in accordance with the amount of fine MAP crystal particles to be recovered. In the liquid cyclone 51, the treated water drops while undergoing swirl flow along the wall of the inverted conical portion of the liquid cyclone, whereby fine MAP crystal particles contained in the liquid are collected together downward toward the wall through the action of centrifugal force and thus concentrated. A part or all of the concentrated fine MAP crystal particles can be fed back into the MAP crystallization reaction tank 1 via the concentrated solid discharge pipe 54, and thus further grown. Moreover, a part of the concentrated fine MAP crystal particles may be recovered.

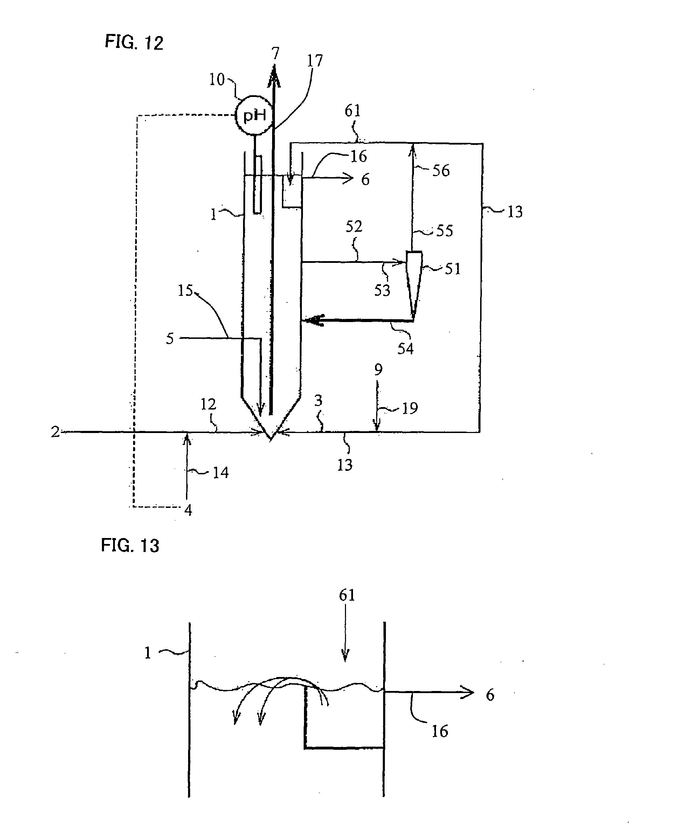

In the case of feeding outflow water from the liquid cyclone 51 back into the MAP crystallization reaction tank 1, this outflow water is preferably fed back into an upper portion of the crystallization reaction tank. This embodiment will now be described with reference to FIGS. 12 and 13.

If the water level balance between the amount of treated water passed into the liquid cyclone 51 and the total amount of raw water 2 and circulating water 3 in the MAP crystallization reaction tank 1 is poor, then the water and fine crystal particles may overflow from the crystallization reaction tank 1, or the water level in the crystallization reaction tank 1 may drop, whereby air may get into the pump, and hence the prescribed pump performance may no longer be obtained. In this case, one can envisage a method in which a water level gauge is installed in the MAP crystallization reaction tank 1, and the rotational speed of the liquid cyclone inflow pump (omitted from the drawing) or a valve is controlled. However, to prevent soiling of the water level gauge, clogging of the valve, and so on, it would be necessary to carry out cleaning frequently.

In a preferable embodiment of the present invention, as shown in FIG. 12 (with FIG. 13 giving a detailed view), a part 61 of the outflow water separated out by the liquid cyclone 51 is fed back into the upper portion of the MAP crystallization reaction tank 1 or forward (front) of the pump (omitted from the drawing) for passing the treated water into the liquid cyclone, whereby these problems can be resolved. That is, (1) the amount of the liquid cyclone outflow water fed back into the crystallization reaction tank 1 is made to be greater than the total amount of the raw water 2 and the circulating water 3 in the MAP crystallization reaction tank 1, and (2) the liquid cyclone outflow water is supplied into the upper portion of the MAP crystallization reaction tank 1, whereby a water flow heading toward the outlet of the MAP crystallization reaction tank 1 leading to the liquid cyclone arises in the upper portion of the MAP crystallization reaction tank 1, the remainder being discharged as treated water to outside the system. For example, taking the amount of the raw water and the circulating water supplied into the MAP crystallization reaction tank 1 to be 1Q, and the amount of the liquid cyclone outflow water fed back into the MAP crystallization reaction tank 1 to be 2Q, in the upper portion of the MAP crystallization reaction tank 1, 1Q becomes a flow heading toward the outlet of the MAP crystallization reaction tank 1 leading to the liquid cyclone, and the remaining 1Q is discharged as treated water. In this way, the same amount as the amount supplied in of the raw water and circulating water overflows from the upper portion of the MAP crystallization reaction tank 1, and hence the water surface level in the MAP crystallization reaction tank 1 can be maintained. Note that in FIGS. 12 and 13, an embodiment is shown in which a part of the outflow water from the liquid cyclone 51 is supplied into the upper portion of the crystallization reaction tank 1, and the remainder of the outflow water from the liquid cyclone 51 is supplied into the lower portion of the crystallization reaction tank 1 after having the prescribed chemical agent 9 added thereto and dissolved therein; the treated water 6 is taken out from the crystallization reaction tank 1 via the discharge pipe 16.

Hitherto, to prevent the phosphorus recovery rate from dropping due to production and flowing out of fine crystals, there has been a tendency to reduce the surface loading, whereby the fluidized layer reactor increases in size. According to the second embodiment of the present invention, by (1) suitably devising the method of adding the chemical agent, and (2) efficiently using a liquid cyclone, it has become possible to greatly contribute to reducing the size of the reactor and increasing the phosphorus recovery rate.

Note that in the case of the second embodiment of the present invention , it is possible to further provide a seed crystal production tank, and grow at least a part of the fine crystal particles recovered by the liquid cyclone in the seed crystal production tank to produce seed crystals, and then supply these seed crystals into the crystallization reaction tank.

The method of this embodiment will now be described with reference to the drawings. As earlier, in the drawings, constituent elements having the same function will be represented by the same reference numeral, and description thereof will be omitted as appropriate.

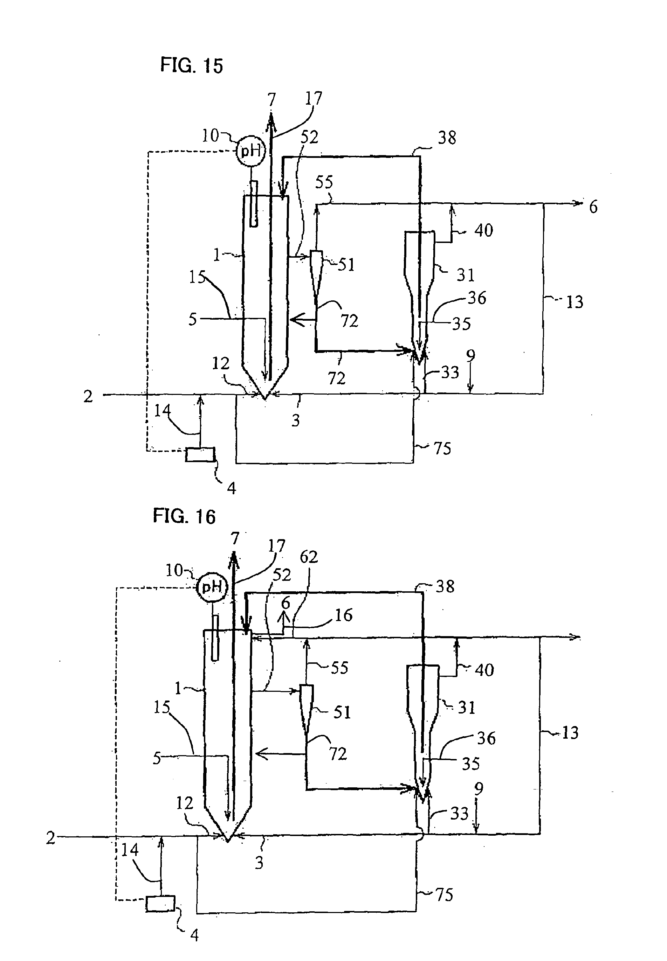

FIG. 15 shows an example of the constitution of a crystallization reaction apparatus of the above embodiment. In the following, a description will be given of a method and apparatus system for recovering phosphorus in a treated liquid by crystallizing out MAP crystals.

The crystallization reaction apparatus shown in FIG. 15 comprises a crystallization reaction tank 1 in which MAP crystal particles are grown (hereinafter referred to as a 'MAP crystallization reaction tank'), a seed crystal production tank 31, and a liquid cyclone 51.

In the MAP crystallization reaction tank 1, seed crystals are grown to form MAP crystal particles. There are no particular limitations on the shape of the MAP crystallization reaction tank 1, but in a preferable embodiment, a shape comprising a straight trunk portion with a lower portion thereof having an inverted conical shape can be adopted as shown in FIG. 15. The MAP crystallization reaction tank 1 has connected thereto a raw water supply pipe 12, a circulating water supply pipe 13, a treated water outflow pipe (fine crystal transfer pipe) 52 leading to the liquid cyclone, and a withdrawal pipe 17 for product crystals 7. The treated water outflow pipe 52 leading to the liquid cyclone can be connected in a position higher than a fluidized layer of MAP particles is formed in the MAP crystallization reaction tank 1, but below the liquid surface in the crystallization reaction tank; a fine crystal particle-containing liquid in the MAP crystallization reaction tank 1 is transferred into the liquid cyclone 51 via this treated water outflow pipe 52. In the case that the raw water has a high SS, or the case that one wishes to promote fluidizing of the crystals in the crystallization reaction tank 1, air 5 may further be supplied into the MAP crystallization reaction tank 1 via an air supply pipe 15. The position at which the air 5 is supplied in may be anywhere, but is preferably in the central portion of a transverse section rather than near to the side wall of the reaction tank, and moreover in the vertical direction, is preferably in the fluidized layer of MAP particles formed in the tank.

It is preferable to make the MAP crystallization reaction tank always have seed crystals therein so that the seed crystals will form a packed layer of at least a desired height.

The raw water 2, and circulating water 3 obtained by branching off a part of the liquid cyclone outflow water (treated water) 55, can be supplied into the inverted conical portion at the bottom of the crystallization reaction tank 1. There are no particular limitations on the directions of passing in the raw water and the circulating water, but in a preferable form, the inflow pipes are connected such as to be tangential to the transverse section of the reaction tank. By introducing the raw water 2 and the circulating water 3 in tangentially to the transverse section of the crystallization reaction tank, a vortex due to the raw water and the circulating water is formed through the liquid force produced through the raw water and the circulating water being supplied in, whereby the liquid and the crystal particles in the crystallization reaction tank are fluidized uniformly. Here, uniform fluidizing means a state of fluidizing in which the raw water 2 and/or the circulating water 3 is/are supplied in such as to go around the outer periphery of the transverse section where the raw water supply pipe 12 and the circulating water supply pipe 13 are connected at least once, with dead zones where the liquid and the crystal particles do not move not arising. By attaining such a state of fluidizing, the mixing together of the substances involved in the crystallization reaction (phosphorus, ammonium, magnesium, and alkali in the case of MAP crystallization), and the contact between these involved substances and the crystal surfaces become very good.

The chemical agent required for the crystallization reaction, for example the magnesium compound 9 in the case of MAP crystallization, can be supplied into a part of the outflow water from the liquid cyclone 51, with the resulting solution being fed back into the crystallization reaction tank 1 as the circulating water 3, as shown in FIG. 15. The phosphorus concentration in the outflow water from the liquid cyclone 51 is reduced, and hence supersaturation is hardly produced even upon adding the magnesium compound, and thus there is very little production of MAP. Consequently, even in the case of a high-concentration magnesium stock liquid, by adopting the supply method described above, this can be supplied into the crystallization reaction tank 1 after having been diluted to a sufficiently low concentration by the circulating water 3, and hence a local highly supersaturated state can be prevented from being formed in the crystallization reaction tank 1. The magnesium compound added may be in an ionic form, or may be in the form of a compound; for example, magnesium chloride, magnesium hydroxide, magnesium oxide, magnesium sulfate, or the like can be used.

It is preferable to measure the pH inside the crystallization reaction tank 1 using a pH meter 10, and add an alkali 4 as required so as to maintain the reaction environment at a suitable pH. The alkali 4 can be supplied into the raw water 2 or the crystallization reaction tank 1. In the case of supplying the alkali 4 into the raw water 2, the site of the addition may be in a raw water tank (not shown in the drawing) or in the raw water supply pipe 12. In the case of supplying the alkali 4 into the crystallization reaction tank 1, it is preferable to supply in the alkali 4 near to the position of supplying in the raw water 2 and/or the circulating water 3. In this case, the alkali 4 will be diluted by the raw water upon flowing into the crystallization reaction tank 1, and hence a local supersaturated state can be prevented from forming in the crystallization reaction tank 1. Caustic soda, magnesium hydroxide, calcium hydroxide, or the like can be used as the alkali 4. The addition of the alkali 4 can be carried out by operating with any of various control methods such as proportional control or on/off control of an alkali injecting pump (not shown in the drawing) in accordance with the pH value measured by the pH measuring instrument 10 in the crystallization reaction tank 1 so as to achieve the desired pH value. Regarding the desired pH, the set value is preferably varied in accordance with the ammonia concentration, the phosphorus concentration, the magnesium concentration and so on in the raw water, for example it is preferable to vary the set value in accordance with the type of the raw water (liquid to be treated) and concentration variations, for example to pH 7.0 to 8.0 in the case of treating raw water having an ammonia concentration of more than 1000 mg/L, and pH 8.0 to 9.5 in the case of treating raw water having an ammonia concentration of less than 300 mg/L.

The liquid cyclone 51 has, for example, a lower portion structure with an inverted conical shape as shown in FIG. 15; connected to the liquid cyclone 51 are the treated water transfer pipe 52, a concentrated fine crystal discharge pipe 72, and a liquid cyclone outflow pipe 55. The concentrated fine crystal discharge pipe 72 is branched so as to be connected to each of the MAP crystallization reaction tank 1 and the seed crystal production tank 31, and has a structure such that fine MAP crystal particles can be transferred into either of these tanks by opening and closing valves (omitted from the drawing) in the concentrated fine crystal discharge pipe 72.

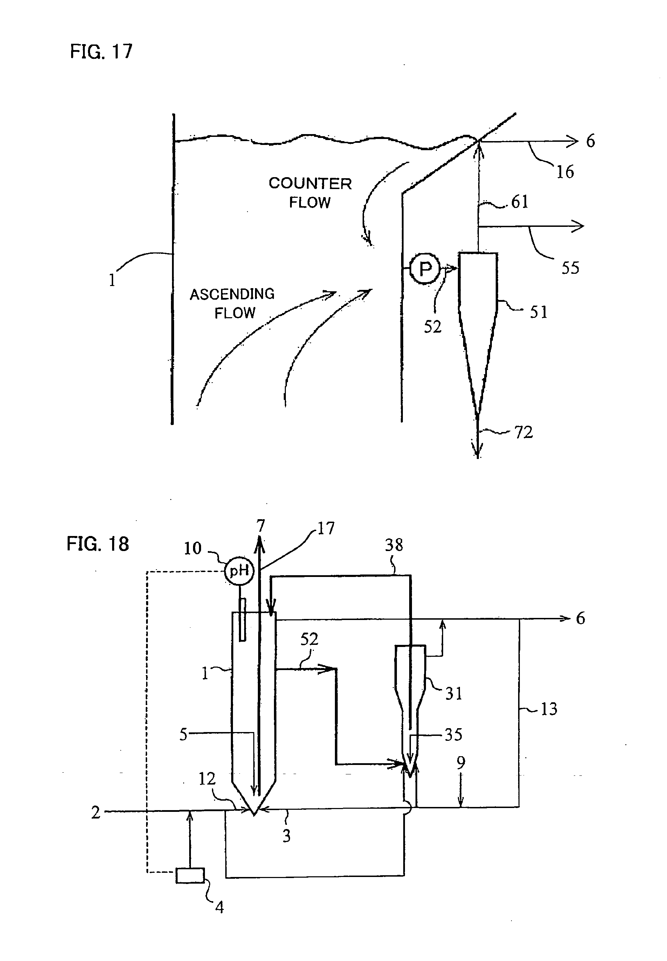

As the method of transferring the treated water into the liquid cyclone 51 from the MAP crystallization reaction tank 1, pump transfer, natural downflow, or the like can be adopted. With pump transfer, a pump P (see FIG. 17) is installed in the treated water transfer pipe 52, and the treated water in the crystallization reaction tank 1 can be force-fed into the liquid cyclone 51 using this pump P. The flow rate of the treated water transferred into the liquid cyclone 51 can be set as appropriate in accordance with the amount of fine MAP crystal particles to be recovered. In the liquid cyclone 51, the treated water containing the fine MAP crystal particles drops while undergoing swirl flow along the wall of the inverted conical portion of the liquid cyclone, whereby the fine MAP crystal particles are collected together downward toward the wall through the action of centrifugal force and thus concentrated. A part or all of the concentrated fine MAP crystal particles can be transferred into the seed crystal production tank 31 or the MAP crystallization reaction tank 1 via the concentrated fine crystal discharge pipe 72. It is generally preferable for it to be made such that the fine MAP crystal particles recovered in the liquid cyclone 51 are supplied into the seed crystal production tank 31. By opening the valve on the MAP crystallization reaction tank 1 side as appropriate, fine MAP crystal particles can also be transferred into the MAP crystallization reaction tank 1. Note that fine MAP crystal particles may be supplied into the MAP crystallization reaction tank 1 at all times, and moreover all of the fine MAP crystal particles may be supplied into the MAP crystallization reaction tank 1. Furthermore, a part of the fine MAP crystal particles recovered in the liquid cyclone 51 may be recovered.

Fine MAP crystal particles recovered in the liquid cyclone 51 are grown in the seed crystal production tank 31 to form seed crystals. As shown in FIG. 15, a lower portion of a straight trunk portion of the seed crystal production tank 31 can, for example, be made to have an inverted conical shape. A raw water supply pipe 75 branched off from the raw water supply pipe 12, a circulating water supply pipe 33 branched off from the circulating water supply pipe 13, a treated water outflow pipe 40, and the seed crystal transfer pipe 72 from the liquid cyclone 51 can be connected to the seed crystal production tank 31. As for the MAP crystallization reaction tank 1, a supply pipe 36 for air 35 may also be connected to the seed crystal production tank 31.

The raw water 2, and the circulating water 3 into which the Mg compound 9 has been added and dissolved, are supplied into the seed crystal production tank 31, whereby the substances involved in the crystallization reaction are subjected to crystallization on the surfaces of the fine MAP crystal particles so that the fine MAP crystal particles grow, thus forming seed crystals. The grown seed crystals are fed back into the MAP crystallization reaction tank 1 as appropriate. As the means for feeding the grown seed crystals back into the MAP crystallization reaction tank, one can envisage any of various pumps, or a valve switching operation, but in the embodiment shown in FIG. 15, an air lift pump 38 can be used. The feeding back of the grown seed crystals may be carried out intermittently or continuously. The frequency of feeding back the grown seed crystals and the amount of the grown seed crystals fed back are set such that the mean particle diameter of the MAP crystal particles in the MAP crystallization reaction tank 1 is a desired value. For example, assuming that 80 kg of MAP product crystals 7 of mean particle diameter 0.6 mm are withdrawn out from the MAP crystallization reaction tank 1 per day, 10 kg per day (kg/d) of seed crystals of mean particle diameter 0.3 mm (1/2 the particle diameter, i.e. 1/8 the volume, of the product crystal particles), or 30 kg of seed crystals of mean particle diameter 0.3 mm once every three days, can be transferred from the seed crystal production tank 31 into the crystallization reaction tank 1.

A part of the crystal particles grown in the crystallization reaction tank 1 are withdrawn as appropriate as the product crystals 7. As the method for withdrawing the crystals, there is a method in which the crystals are withdrawn from the bottom of the reaction tank 1 by opening and closing a valve, but there have been many problems due to such a valve becoming blocked. In the embodiment shown in FIG. 15, problems such as valve blockage are eliminated by using an air lift pump 17, whereby the crystals can be withdrawn well. When withdrawing the product crystals 7, the supply of the air 5 into the reaction tank 1 is stopped, and the crystals are graded, whereby MAP crystal particles having a large particle diameter can be selectively recovered. After the air lift pump has been turned off, it is preferable to clean the inside of the air lift pipe. The cleaning of the air lift pipe can be carried out by making MAP remaining in the air lift pipe flow back into the crystallization reaction tank using water or air. By carrying out such cleaning of the air lift pipe, blockage of the air lift pipe can be prevented.

By supplying MAP crystal particles having a small particle diameter (seed crystals) from the seed crystal production tank 31, and selectively recovering relatively large MAP crystal particles, stable treatment becomes possible, with no variation of the mean particle diameter of the crystal particles in the MAP crystallization reaction tank 1.

As with the embodiment shown in FIGS. 12 and 13, when feeding the outflow water from the liquid cyclone 51 and the outflow water from the seed crystal production tank 31 back into the MAP crystallization reaction tank 1, it is preferable to feed at least a part of this outflow water into the upper portion of the crystallization reaction tank 1. This embodiment will now be described with reference to FIGS. 16 and 17.

If the water level balance between the amount of treated water flowing into the liquid cyclone 51 from the crystallization reaction tank 1 and the total amount of raw water 2 and circulating water 3 in the MAP crystallization reaction tank 1 is poor, then the water and fine crystal particles may overflow from the crystallization reaction tank 1, or the water level in the crystallization reaction tank 1 may drop, whereby air may get into the pump, and hence the prescribed pump performance may no longer be obtained. In this case, one can envisage a method in which a water level gauge is installed in the MAP crystallization reaction tank 1, and the rotational speed of the pump (omitted from the drawing) for passing the treated water into the liquid cyclone, or a valve is controlled. However, to prevent soiling of the water level gauge, clogging of the valve, and so on, it would be necessary to carry out cleaning frequently.

In a preferable embodiment of the present invention, as shown in FIG. 16 (with FIG. 17 giving a detailed view), a part of the outflow water 55 separated out by the liquid cyclone 51 and a part of the outflow water 40 from the seed crystal production tank 31 are fed via an upper portion supply pipe 62 back into the upper portion of the MAP crystallization reaction tank 1 or forward (front) of the pump (omitted from the drawing) for passing the treated water into the liquid cyclone, whereby these problems can be resolved. That is, (1) the amount of the liquid cyclone outflow water fed back into the crystallization reaction tank 1 is made to be greater than the total amount of the raw water 2 and the circulating water 3 in the MAP crystallization reaction tank 1, and (2) the surface of the liquid cyclone outflow water introduced into the crystallization reaction tank is made to be at the same level as the surface of the water in the MAP crystallization reaction tank 1, whereby a circulating flow in which the outflow water 61 from the liquid cyclone 51 flows toward the MAP crystallization reaction tank 1 is produced, and hence the above problems can be resolved. Note that in FIG. 16, an embodiment is shown in which a part of the outflow water from the liquid cyclone 51 and the seed crystal production tank 31 is supplied into the upper portion of the crystallization reaction tank 1, and the remainder of the outflow water from the liquid cyclone 51 and the seed crystal production tank 31 is supplied into the lower portion of the crystallization reaction tank 1 after having the prescribed chemical agent 9 added thereto and dissolved therein; the treated water 6 is taken out from the crystallization reaction tank 1 via the discharge pipe 16.

In the second embodiment of the present invention, as for the first embodiment of the present invention already described, again the liquid to be treated and the circulating water can be introduced into the crystallization reaction tank and/or the seed crystal production tank tangentially to a transverse section of the tank, and air can be further supplied into a central portion of the transverse section of the crystallization reaction tank and/or the seed crystal production tank. Furthermore, as the crystallization reaction tank and/or the seed crystal production tank, it is possible to use a reaction vessel of a shape in which the transverse section of a lower portion is smaller than the transverse section of an upper portion, and it is further possible to use a reaction vessel in which the lowermost portion has an inverted conical shape.

According to each of the various embodiments of the present invention described above, the crystallization reaction process can be carried out efficiently. Moreover, according to another embodiment of the present invention, the problem of fine crystal particles being formed and the recovery rate dropping due to a state of high concentration of the substances involved in the crystallization reaction can be resolved.

For example, in the case of carrying out dephosphorization treatment on raw water by making phosphorus in the raw water into insoluble MAP as the crystallization reaction, using a dephosphorization treatment apparatus provided with a crystallization reaction tank in which MAP crystal particles are produced, means for supplying raw water containing phosphorus into the crystallization reaction tank, and means for supplying a magnesium compound, a pH adjustor and ammonium as required into the crystallization reaction tank or equipment peripheral to the crystallization reaction tank, treatment has hitherto been carried out by operating such that the value obtained by multiplying the molar concentrations of the phosphorus, the ammonium, the magnesium and the alkali together is at least the solubility product of MAP, and moreover making the ammonium and the magnesium be present in an equimolar amount or more compared with the phosphorus in the raw water.

When precipitating out MAP, a trend is seen wherein the higher the reaction pH, the higher the amount of MAP precipitated out, and hence the lower the phosphorus concentration in the treated water. However, if the reaction is carried out in an excessively alkaline environment, then fine MAP will undergo self-nucleation, and hence the MAP will flow out together with the treated water, causing a deterioration in the treated water quality. Treatment has thus been carried out with the reaction pH in a range of 7.5 to 10, preferably 7.5 to 9, although this does depend on the ammonium concentration and the magnesium concentration of the raw water.

Raw water containing an excess of ammonium relative to phosphorus in the water to be treated, for example reject water that has been subjected to anaerobic digestion, reject water produced from a sludge treatment process, or the like has a low magnesium content relative to the phosphorus in the water to be treated, and hence hitherto a magnesium compound has been added into the MAP production tank or equipment peripheral thereto. Moreover, addition of an alkali (e.g. caustic soda) has also been carried out as required.

In the case of producing MAP by adding a magnesium compound into water to be treated containing phosphorus, magnesium chloride has generally been used as the magnesium compound added, and this has generally been added in an equimolar amount or more compared with the phosphorus in the water to be treated. Magnesium chloride is a substance that is readily soluble, and easy to handle. However, magnesium chloride has a high unit price, and hence the cost for the magnesium chloride in the dephosphorization apparatus is a considerable amount of money, and thus the running cost for the treatment has been excessive. Furthermore, magnesium chloride is often in the form of the hexahydrate, and hence the magnesium content is low at approximately 12 wt%, and thus the amount used has been large.

In view of this state of affairs, in Japanese Patent Publication JP-A- 2002-18448, there has been proposed using magnesium hydroxide, which is poorly soluble but has a cheap unit price and has a high magnesium content of approximately 42 wt%, as an additive for producing MAP. In the proposed method, it is stated that to prevent the pH from rising and hence fine MAP being produced upon the dissolution of the magnesium hydroxide, magnesium hydroxide slurry is dissolved using treated water that has been subjected to the dephosphorization treatment, and the resulting magnesium ion-containing water, which has a higher dissolvable magnesium ion concentration than the treated water, is supplied into the crystallization reaction tank.

However, in the case that the ammonium concentration in the raw water is high, there have still been problems of (1) precipitation of fine MAP due to the rise in the pH in the crystallization reaction tank, and (2) a drop in the phosphorus recovery rate due to the influence of some undissolved magnesium hydroxide.

Moreover, in Japanese Patent Publication JP-A- 2002-326089, there has been proposed, in the case of an apparatus for removing phosphorus comprising a crystallization reaction tank and an ageing tank, a dephosphorization method and apparatus according to which phosphorus in raw water is removed stably with a high removal efficiency by using MAP crystal particles grown in the ageing tank as seed crystals in the crystallization reaction tank.

However, although there is description of raw water apportioning means, an alkali supply pipe, an Mg compound supply pipe, and a pH measuring apparatus are provided separately for each tank, and hence there have been problems such as the treatment process and operation control being troublesome, and the equipment cost rising.

According to a third embodiment of the present invention, the above problems are resolved by adding a poorly soluble compound slurry and an acid to a part of a treated liquid flowing out form a crystallization reaction tank, and supplying the resulting liquid into the crystallization reaction tank as a circulating liquid.

That is, the third embodiment of the present invention relates to a method for removing ions to be removed in a liquid to be treated by crystallizing out crystal particles of a poorly soluble salt of the ions to be removed in the liquid to be treated in a crystallization reaction tank, which comprises using a poorly soluble compound slurry as a chemical agent required for the crystallization reaction, adding the poorly soluble compound slurry and an acid to a part of a treated liquid flowing out from the crystallization reaction tank, and supplying the resulting liquid into the crystallization reaction tank as a circulating liquid.

Moreover, in the third embodiment of the present invention, as with the other embodiments described earlier, an embodiment can be adopted in which a seed crystal production tank is further provided, fine crystal particles in the crystallization reaction tank are transferred into the seed crystal production tank, and are grown in the seed crystal production tank to form seed crystals, and the seed crystals are fed back into the crystallization reaction tank.

Following is a description of the third embodiment of the present invention with reference to the drawings. In the following, an embodiment in which a crystallization reaction tank and a seed crystal production tank are used will be described. Moreover, in the following, a method for removing and recovering phosphorus from raw water (a liquid to be treated) containing phosphorus and ammonia nitrogen by crystallizing out magnesium ammonium phosphate (MAP) will be described. As with previously, in the description of the drawings below, constituent elements having the same function as constituent elements in the drawings already described will be represented by the same reference numeral, and description thereof will be omitted as appropriate.

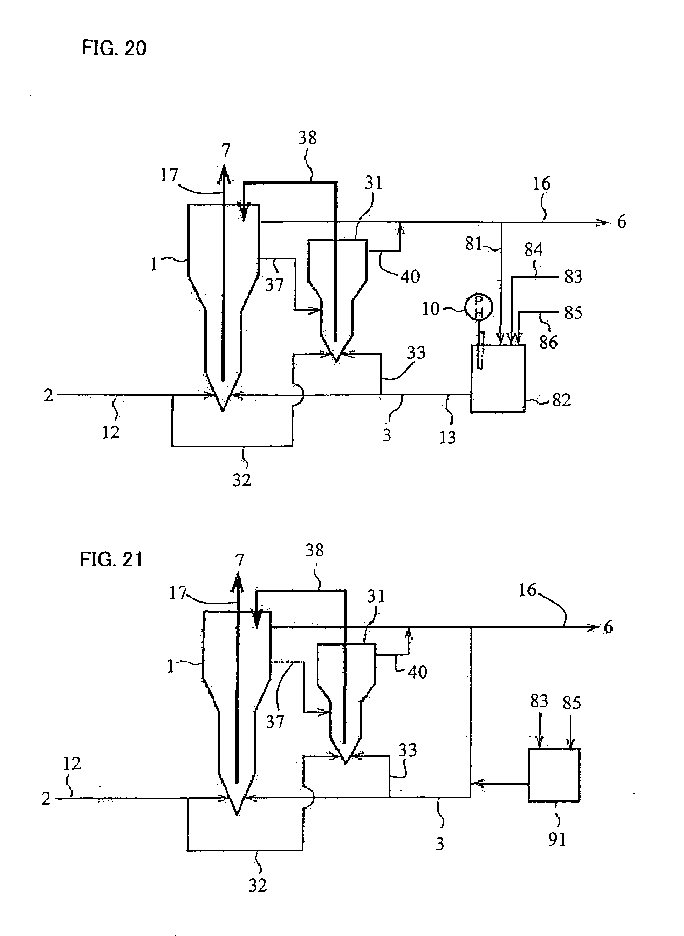

FIG. 20 shows an embodiment of a water treatment apparatus according to the third embodiment of the present invention. The treatment apparatus shown in FIG. 20 comprises a MAP crystallization reaction tank 1, a seed crystal production tank 31, and a circulating water adjustment tank 82.

Chemical agents added to the circulating water are a poorly soluble magnesium compound slurry and an acid. There are various examples of poorly soluble magnesium compounds that can be used, but of these, from the standpoint of cost, magnesium oxide, magnesium hydroxide, magnesium carbonate, magnesium hydroxycarbonate, or the like can be suitably used as a poorly soluble magnesium compound slurry having a low unit price. In the embodiment described below, magnesium hydroxide is used as the magnesium compound. Moreover, sulfuric acid, hydrochloric acid, or the like can be used as the acid. In the embodiment described below, sulfuric acid is used.

The MAP crystallization reaction tank 1 can have connected thereto a raw water supply pipe 12, a circulating water supply pipe 13, a treated water outflow pipe 16, a transfer pipe 37 for leading fine MAP crystal particles into the seed crystal production tank, a withdrawal pipe 17 for product crystals, and so on. The seed crystal production tank 31 can have connected thereto a raw water supply pipe 32 branched off from the raw water supply pipe 12, a circulating water supply pipe 33 branched off from the circulating water supply pipe 13, an outflow pipe 40 for treated water from the seed crystal production tank, the transfer pipe 37 for the fine MAP crystal particles, a transfer pipe 38 for the seed crystals, and so on. The circulating water adjustment tank 82 can have connected thereto a lead-in pipe 81 into which a part of the treated water 6 is branched, a magnesium hydroxide supply pipe 84, a sulfuric acid supply pipe 86, a pH meter 10, the circulating water supply pipe 13, and so on.

MAP crystal particles of mean particle diameter 0.1 to 3 mm are packed in advance into the MAP crystallization reaction tank 1 to a prescribed layer height. The raw water 2 and the circulating water 3 are continuously passed in as an ascending flow from the bottom of the MAP crystallization reaction tank 1. While the raw water 2 is passing through the MAP crystallization reaction tank 1, the phosphorus and ammonium in the raw water, and the magnesium in the circulating water react together, whereby MAP is crystallized on the surfaces of the seed crystals, and hence the phosphorus in the raw water is removed. A part of the MAP crystal particles 7 grown in the MAP crystallization reaction tank 1 are withdrawn as appropriate, thus recovering the MAP crystal particles. At this time, it is made to be such that the packing height of the fluidized layer of MAP particles formed in the crystallization reaction tank 1 does not become too low. FIG. 20 shows a method in which an air lift pump 17 is used as the method of recovering the grown MAP crystal particles, but the grown MAP crystal particles can instead be recovered from the bottom of the reactor.

The magnesium hydroxide 83 and the sulfuric acid 85 are added to a part of the treated water in the circulating water adjustment tank 82, and the mixed liquid thus obtained is taken as the circulating water 3. The circulating water 3 is supplied into the crystallization reaction tank 1 and the seed crystal production tank 31 via the pipes 13 and 33 respectively.

The solubility of magnesium hydroxide is 0.9 mg/100g, and hence magnesium hydroxide dissolves with great difficulty. Moreover, the solubility of magnesium oxide is 0.62 mg/100g, the solubility of magnesium carbonate is 10.6 mg/100g, and the solubility of magnesium hydroxycarbonate is 25 mg/100g, and hence each of these is poorly soluble (Kagaku Daijiten ('Large Dictionary of Chemistry'), published by Kyoritsu Shuppan).

In a conventional method, only magnesium hydroxide has been added into the circulating water adjustment tank 82. As a result, the pH in the liquid immediately rises above, or equal to 9, and hence due to undissolved magnesium compound, fine MAP crystals produced upon the rise in pH, and so on, it has not been possible to carry out treatment stably.

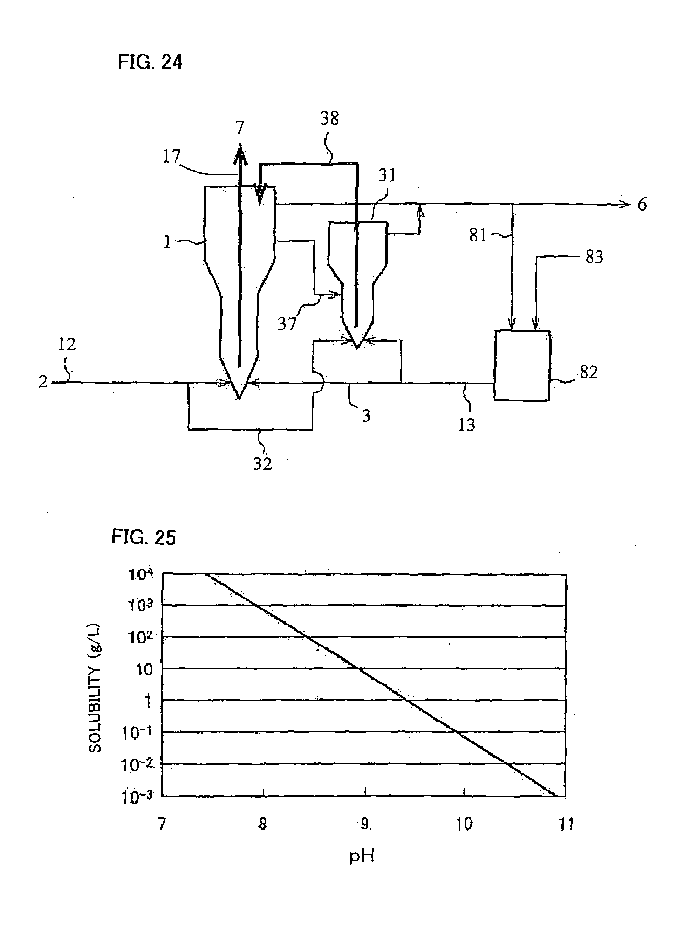

The solubility of the poorly soluble magnesium compounds described above depends on the pH, with the magnesium compounds dissolving better the lower the pH. As one example, the relationship between the solubility of magnesium hydroxide and the pH is shown in FIG. 25. The solubility of magnesium hydroxide is approximately 7 g/L at pH 9, and is a hundred times higher at approximately 700 g/L at pH 8.

In the third embodiment of the present invention, the poorly soluble magnesium compound slurry is added to the circulating water branched off from the treated water, and moreover an acid is added thereto to suppress the rise in pH, whereby undissolved magnesium compound and fine MAP crystals are prevented from floating in the circulating water. As a result, it becomes possible to carry out treatment stably.

Regarding the addition of the sulfuric acid into the circulating water, the amount of sulfuric acid added can be controlled so as to obtain a desired pH, this being in accordance with the pH value measured by the pH meter 10 installed in the circulating water adjustment tank 82. The control can be carried out through on/off control, proportional control, or the like. Regarding the desired pH, the set value is preferably varied in accordance with the ammonia concentration, the phosphorus concentration, and the magnesium concentration in the raw water, for example it is preferable to vary the set value in accordance with the type of the liquid to be treated and concentration variations, for example to pH 7.0 to 8.0 in the case of treating raw water having an ammonia concentration of more than, or equal to 1000 mg/L, and pH 8.0 to 9.5 in the case of treating raw water having an ammonia concentration of less than 300 mg/L.

The treated water to which the magnesium hydroxide and the sulfuric acid have been added is preferably made to have a dissolvable phosphorus concentration of not more than 20 mg/L, preferably not more than 10 mg/L. Wastewater such as separated liquid from digestion has a high dissolvable phosphorus concentration of 100 to 600 mg/L, and if magnesium hydroxide is added to such wastewater then supersaturation readily occurs and hence fine MAP crystal particles are produced. On the other hand, the phosphorus concentration of treated water after crystallizing out MAP is low at not more than 20 mg/L, and hence even if magnesium hydroxide is added to such treated water, supersaturation will hardly occur, and hence fine MAP crystal particles are not produced, and the recovery rate can be prevented from dropping.

Moreover, another merit of dissolving the magnesium hydroxide using treated water from the crystallization reaction tank is that compared with city water or secondary or tertiary treated water, separated water from anaerobic digestion or drainage water such as return water has a better buffer action, and hence acts to suppress a rise in pH.

A merit of supplying the circulating water 3 into the crystallization reaction tank 1 after the poorly soluble magnesium compound slurry and the acid have been dissolved in the circulating water is that compared with the case of injecting a high concentration of magnesium (1 to 10%) directly into the crystallization reaction tank as conventionally, the magnesium can be injected in after the concentration thereof has been sufficiently reduced (to below 0.1%). As a result, a local highly supersaturated state is not formed in the crystallization reaction tank, and hence precipitation of fine MAP crystal particles is suppressed, and thus the recovery rate can be prevented from dropping.

The amount of the magnesium hydroxide added per unit time is preferably made to be 0.5 to 1.5 times in terms of magnesium (kg-Mg/hr) the amount of phosphorus supplied in (kg-P/hr).

The circulating water 3 of which the pH and the magnesium concentration have been adjusted in the circulating water adjustment tank 82 can be supplied into the MAP crystallization reaction tank 1 and the seed crystal production tank 31 with a prescribed apportioning ratio. At this time, it is preferable to make the apportioning ratio into the respective tanks for the circulating water 3 be the same as the apportioning ratio into the respective tanks for the raw water 2. By doing this, the ratio between the phosphorus, ammonia and Mg supplied in will be the same for the respective tanks, and hence it will no longer be necessary to carry out control separately for the respective tanks, and thus the treatment process and the operation control can be simplified. Moreover, the number of pieces of equipment can be reduced, and hence the equipment cost can be reduced.

In the apparatus of FIG. 20, fine MAP crystal particles floating in the MAP crystallization reaction tank 1 are transferred into the seed crystal production tank 31, and are grown in the seed crystal production tank 31 to produce seed crystals. The raw water 2 and the circulating water 3 can be passed in continuously as an ascending flow from the bottom of the seed crystal production tank 31. While the raw water 2 is passing through the seed crystal production tank 31, the phosphorus and ammonium in the raw water, and the magnesium in the circulating water react together, whereby MAP is crystallized on the surfaces of the fine MAP crystal particles, and hence the fine MAP crystals grow. The seed crystals grown in the seed crystal production tank 31 can be transferred into the MAP crystallization reaction tank 1 as appropriate. In FIG. 20, a system is shown in which an air lift pump 38 is used as the method of transferring the seed crystals from the seed crystal production tank 31 into the crystallization reaction tank 1. As shown in FIG. 20, the discharge pipe 40 for the outflow water from the seed crystal production tank 31 can be connected to the discharge pipe 16 for the outflow water 6 from the crystallization reaction tank 1.

The raw water can be supplied into the MAP crystallization reaction tank 1 and the seed crystal production tank 31 with a prescribed apportioning ratio.

FIG. 21 shows an example in which a chemical agent adjustment tank 91 is provided. In the chemical agent adjustment tank 91, magnesium hydroxide 83 and sulfuric acid 85 are mixed together, thus adjusting to a prescribed concentration and pH. The adjusted chemical liquid is then added to the circulating water 3, which is obtained by branching off a part of the treated water 6, and then the circulating water 3 is apportioned into the respective tanks. Other than that, operation is as described above with regard to FIG. 20.

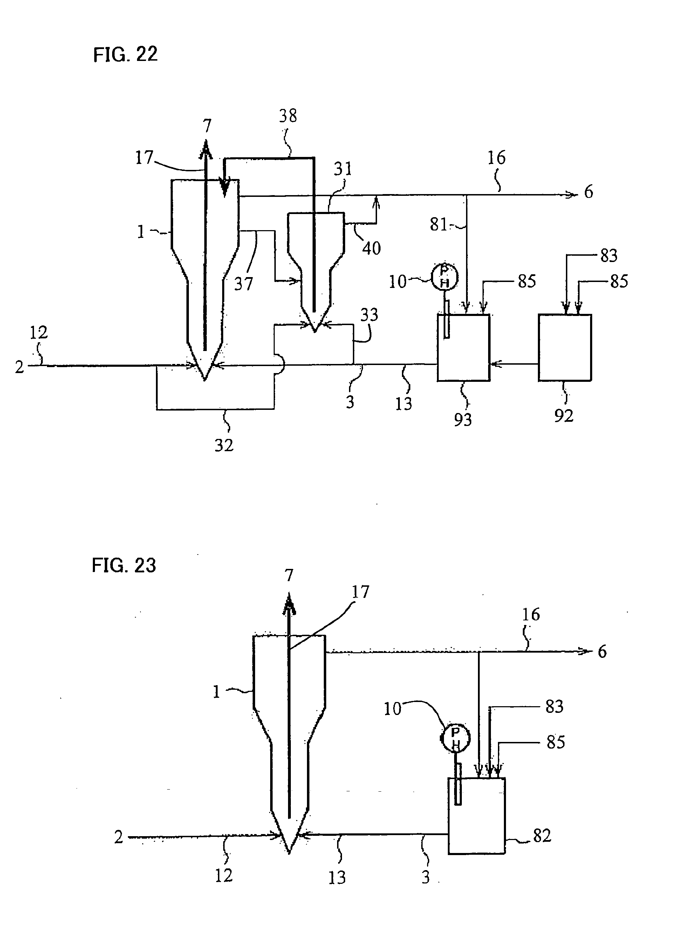

In FIG. 22, a method in which adjustment of the pH is carried out in two stages is explained. In a first stage pH adjustment tank 92, magnesium hydroxide 83 and sulfuric acid 85 are added. The sulfuric acid 85 may be added in proportion to the amount added of the magnesium hydroxide 83, or may be added in accordance with the pH value measured by an installed pH meter (not shown in the drawing). In a second stage pH fine adjustment tank 93, sulfuric acid 85 is added to carry out fine adjustment of the pH. As with the first stage pH adjustment tank 92, the sulfuric acid 85 may be added in proportion to the amount added of the magnesium hydroxide, but is preferably added in accordance with the pH value measured by an installed pH meter 10. Moreover, in the case that the pH drops too much, an alkali can be separately added. Other aspects of the method are as described above with regard to FIG. 20.

In the third embodiment of the present invention, as for the first embodiment of the present invention already described, again the liquid to be treated and the circulating water can be introduced into the crystallization reaction tank and/or the seed crystal production tank tangentially to a transverse section of the tank, and air can be further supplied into a central portion of the transverse section of the crystallization reaction tank and/or the seed crystal production tank. Furthermore, as the crystallization reaction tank and/or the seed crystal production tank, it is possible to use a reaction vessel of a shape in which the transverse section of a lower portion is smaller than the transverse section of an upper portion, and it is further possible to use a reaction vessel in which the lowermost portion has an inverted conical shape.

Note that in the above description of specific embodiments, description has been given for a method of removing phosphorus from a liquid to be treated containing phosphorus and ammonia nitrogen by crystallizing out magnesium ammonium phosphate (MAP); however, such a method can also be used to remove phosphorus from a liquid to be treated containing phosphorus by crystallizing out hydroxyapatite (HAP). In this case, a calcium compound is added as the chemical agent required for the crystallization reaction. Moreover, similarly, using the present invention, fluorine can be removed from wastewater containing fluoride ions, for example wastewater from a semiconductor plant, by crystallizing out calcium fluoride. In this case, a calcium compound is added as the chemical agent required for the crystallization reaction. Furthermore, using the present invention, by adding a calcium compound to hard water containing carbonate ions and crystallizing out calcium carbonate, the hardness of the water to be treated can be reduced. Alternatively, by adding carbonate ions to a liquid to be treated containing calcium and crystallizing out calcium carbonate, calcium ions can be removed from the water to be treated. Furthermore, using the present invention, by adding carbonate ions to tap water, manganese, which is an impurity in tap water, can be removed by being crystallized out as manganese carbonate.

The present invention also relates to the apparatuses for carrying out the methods described above. Various embodiments of the present invention are given below.

1. A method for removing ions to be removed in a liquid to be treated by crystallizing out crystal particles of a poorly soluble salt of the ions to be removed in the liquid to be treated in a crystallization reaction tank, which comprises adding a chemical agent required for the crystallization reaction into a part of a treated liquid flowing out from the crystallization reaction tank and dissolving the chemical agent therein, and supplying the resulting solution into the crystallization reaction tank as a circulating liquid, wherein the liquid to be treated and the circulating liquid are introduced into the crystallization reaction tank tangentially to a transverse section of the crystallization reaction tank.

2. The method according to above item 1, wherein air is supplied into a central portion of the transverse section of the crystallization reaction tank.

3. The method according to above item 1 or 2, wherein a reaction vessel of a shape in which the transverse section of a lower portion is smaller than the transverse section of an upper portion is used as the crystallization reaction tank, and the liquid to be treated and the circulating liquid are introduced into the lower portion of the reaction tank.

4. The method according to any of above items 1 through 3, wherein a reaction vessel of which a lowermost portion has an inverted conical shape is used as the crystallization reaction tank.

5. The method according to any of above items 1 through 4, wherein the crystallization reaction tank and a seed crystal production tank are used, the liquid to be treated and the circulating liquid are supplied into the seed crystal production tank, and fine crystal particles in the liquid are taken out from the crystallization reaction tank and supplied into the seed crystal production tank, the fine crystal particles are grown in the seed crystal production tank to form seed crystals, and the seed crystals grown in the seed crystal production tank are supplied into the crystallization reaction tank.

6. The method according to above item 5, wherein the fine crystal particles, the liquid to be treated and the circulating liquid are introduced into the seed crystal production tank tangentially to a transverse section of the seed crystal production tank.

7. The method according to above item 5 or 6, wherein air is supplied into a central portion of the transverse section of the seed crystal production tank.

8. The method according to any of above items 5 through 7, wherein a reaction vessel of a shape in which the transverse section of a lower portion is smaller than the transverse section of an upper portion is used as the seed crystal production tank, and the fine crystal particles, the liquid to be treated and the circulating liquid are introduced into the lower portion of the seed crystal production tank.

9. The method according to any of above items 5 through 8, wherein a reaction vessel of which a lowermost portion has an inverted conical shape is used as the seed crystal production tank.

10. A method for removing ions to be removed in a liquid to be treated by crystallizing out crystal particles of a poorly soluble salt of the ions to be removed in the liquid to be treated in a crystallization reaction tank using an apparatus comprising the crystallization reaction tank and a liquid cyclone, which comprises introducing a treated liquid flowing out from the crystallization reaction tank into the liquid cyclone, separating out and recovering fine crystal particles in the treated liquid in the liquid cyclone, feeding a part or all of the recovered fine crystal particles back into the crystallization reaction tank, and moreover adding a chemical agent required for the crystallization reaction to a part of outflow water from the liquid cyclone and dissolving the chemical agent therein, and supplying the resulting solution into the crystallization reaction tank as a circulating liquid.

11. The method according to above item 10, wherein a part of the outflow water from the liquid cyclone is supplied into an upper portion of the crystallization reaction tank.

12. The method according to above item 10 or 11, characterized by further using a seed crystal production tank, supplying a part or all of the fine crystal particles recovered in the liquid cyclone into the seed crystal production tank, growing the fine crystal particles in the seed crystal production tank to form seed crystals, and supplying the seed crystals grown in the seed crystal production tank into the crystallization reaction tank, and moreover adding the chemical agent required for the crystallization reaction to a part of the outflow water from the seed crystal production tank and the outflow water from the liquid cyclone and dissolving the chemical agent therein, and supplying the resulting solution into the crystallization reaction tank as a circulating liquid.

13. The method according to any of above items 10 through 12, wherein the liquid to be treated and the circulating liquid are introduced into the crystallization reaction tank tangentially to a transverse section of the crystallization reaction tank.

14. The method according to any of above items 10 through 13, wherein air is supplied into a central portion of the transverse section of the crystallization reaction tank.

15. The method according to any of above items 10 through 14, wherein a reaction vessel of a shape in which the transverse section of a lower portion is smaller than the transverse section of an upper portion is used as the crystallization reaction tank, and the liquid to be treated and the circulating liquid are introduced into the lower portion of the reaction tank.

16. The method according to any of above items 10 through 15, wherein a reaction vessel of which a lowermost portion has an inverted conical shape is used as the crystallization reaction tank.

17. The method according to any of above items 12 through 16, wherein the fine crystal particles, the liquid to be treated and the circulating liquid are introduced into the seed crystal production tank tangentially to a transverse section of the seed crystal production tank.

18. The method according to any of above items 12 through 17, wherein air is supplied into a central portion of the transverse section of the seed crystal production tank.

19. The method according to any of above items 12 through 18, wherein a reaction vessel of a shape in which the transverse section of a lower portion is smaller than the transverse section of an upper portion is used as the seed crystal production tank, and the fine crystal particles, the liquid to be treated and the circulating liquid are introduced into the lower portion of the seed crystal production tank.

20. The method according to any of above items 12 through 19, wherein a reaction vessel of which a lowermost portion has an inverted conical shape is used as the seed crystal production tank.

21. A method for removing ions to be removed in a liquid to be treated by crystallizing out crystal particles of a poorly soluble salt of the ions to be removed in the liquid to be treated in a crystallization reaction tank, which comprises using a poorly soluble compound slurry as a chemical agent required for the crystallization reaction, adding the poorly soluble compound slurry and an acid to a part of a treated liquid flowing out from the crystallization reaction tank, and supplying the resulting liquid into the crystallization reaction tank as a circulating liquid.

22. The method according to above item 21, wherein the crystallization reaction tank and a seed crystal production tank are used, the liquid to be treated and the circulating liquid are supplied into the seed crystal production tank, and fine crystal particles in the liquid are taken out from the crystallization reaction tank and supplied into the seed crystal production tank, the fine crystal particles are grown in the seed crystal production tank to form seed crystals, and the seed crystals grown in the seed crystal production tank are supplied into the crystallization reaction tank.

23. The method according to above item 22, wherein the liquid flowing out from the seed crystal production tank is merged with the treated liquid flowing out from the crystallization reaction tank.

24. The method according to any of above items 21 through 23, wherein the liquid to be treated and the circulating liquid are introduced into the crystallization reaction tank tangentially to a transverse section of the crystallization reaction tank.

25. The method according to any of above items 21 through 24, wherein air is supplied into a central portion of the transverse section of the crystallization reaction tank.

26. The method according to any of above items 21 through 24, wherein a reaction vessel of a shape in which the transverse section of a lower portion is smaller than the transverse section of an upper portion is used as the crystallization reaction tank, and the liquid to be treated and the circulating liquid are introduced into the lower portion of the reaction tank.

27. The method according to any of above items 21 through 26, wherein a reaction vessel of which a lowermost portion has an inverted conical shape is used as the crystallization reaction tank.

28. The method according to any of above items 22 through 27, wherein the fine crystal particles, the liquid to be treated and the circulating liquid are introduced into the seed crystal production tank tangentially to a transverse section of the seed crystal production tank.

29. The method according to any of above items 22 through 28, wherein air is supplied into a central portion of the transverse section of the seed crystal production tank.

30. The method according to any of above items 22 through 29, wherein a reaction vessel of a shape in which the transverse section of a lower portion is smaller than the transverse section of an upper portion is used as the seed crystal production tank, and the fine crystal particles, the liquid to be treated and the circulating liquid are introduced into the lower portion of the seed crystal production tank.

31. The method according to any of above items 22 through 30, wherein a reaction vessel of which a lowermost portion has an inverted conical shape is used as the seed crystal production tank.

32. The method according to any of above items 1 through 31, wherein phosphorus is removed from the liquid to be treated, which contains phosphorus and ammonia nitrogen, by crystallizing out magnesium ammonium phosphate from the liquid to be treated.

33. The method according to any of above items 1 through 31, wherein phosphorus is removed from the liquid to be treated, which contains phosphorus, by crystallizing out hydroxyapatite from the liquid to be treated.

34. The method according to any of above items 1 through 31, wherein fluorine is removed from the liquid to be treated, which contains fluoride ions, by crystallizing out calcium fluoride from the liquid to be treated.

35. The method according to any of above items 1 through 31, wherein calcium is removed from the liquid to be treated, which contains calcium ions, by crystallizing out calcium carbonate from the liquid to be treated.

36. The method according to any of above items 1 through 31, wherein carbonate ions are removed from the liquid to be treated, which contains carbonate ions, by crystallizing out calcium carbonate from the liquid to be treated.

37. An apparatus for removing ions to be removed in a liquid to be treated by crystallizing out crystal particles of a poorly soluble salt of the ions to be removed in the liquid to be treated through a crystallization reaction, which comprises: a crystallization reaction tank; a liquid-to-be-treated supply pipe that supplies the liquid to be treated into the crystallization reaction tank; a treated liquid discharge pipe that leads out a treated liquid flowing out from the crystallization reaction tank; a circulating water supply pipe that branches off from the treated liquid discharge pipe and feeds the treated liquid back into the crystallization reaction tank; and chemical agent supply means for supplying a chemical agent required for the crystallization reaction into the circulating water; wherein the liquid-to-be-treated supply pipe and the circulating water supply pipe are connected to the crystallization reaction tank tangentially to a transverse section of the reaction tank.

38. The apparatus according to above item 37, further having an air supply pipe that supplies air into a central portion of the transverse section of the crystallization reaction tank.

39. The apparatus according to above item 37 or 38, wherein the crystallization reaction tank is a vessel of a shape in which the transverse section of a lower portion is smaller than the transverse section of an upper portion, and the liquid-to-be-treated supply pipe and the circulating water supply pipe are connected to the lower portion of the crystallization reaction tank.

40. The apparatus according to any of above items 37 through 39, wherein the crystallization reaction tank is a vessel of which a lowermost portion has an inverted conical shape.

41. The apparatus according to any of above items 37 through 40, further having a seed crystal production tank, wherein the liquid-to-be-treated supply pipe and the circulating water supply pipe are also connected to the seed crystal production tank, and further having a fine crystal particle transfer pipe that transfers fine crystal particles in the crystallization reaction tank into the seed crystal production tank from the crystallization reaction tank, and a seed crystal transfer pipe that transfers seed crystals grown in the seed crystal production tank into the crystallization reaction tank.

42. The apparatus according to above item 41, wherein the fine crystal particle transfer pipe, the liquid-to-be-treated supply pipe and the circulating water supply pipe are each connected to the seed crystal production tank tangentially to a transverse section of the seed crystal production tank.

43. The apparatus according to above item 41 or 42, further having an air supply pipe that supplies air into a central portion of the transverse section of the seed crystal production tank.

44. The apparatus according to any of above items 41 through 43, wherein the seed crystal production tank is a vessel of a shape in which the transverse section of a lower portion is smaller than the transverse section of an upper portion, and the liquid-to-be-treated supply pipe and the circulating water supply pipe are connected to the lower portion of the seed crystal production tank.

45. The apparatus according to any of above items 41 through 44, wherein the seed crystal production tank is a vessel of which a lowermost portion has an inverted conical shape.

46. The apparatus according to any of above items 37 through 45, having crystal recovery means for recovering grown crystal particles from the crystallization reaction tank.

47. An apparatus for removing ions to be removed in a liquid to be treated by crystallizing out crystal particles of a poorly soluble salt of the ions to be removed in the liquid to be treated through a crystallization reaction, which comprises: a crystallization reaction tank; a liquid cyclone; a liquid-to-be-treated supply pipe that supplies the liquid to be treated into the crystallization reaction tank; a treated liquid transfer pipe that leads out a treated liquid flowing out from the crystallization reaction tank into the liquid cyclone; a treated liquid discharge pipe that leads out outflow water from the liquid cyclone; a circulating water supply pipe that branches off from the treated liquid discharge pipe and feeds the treated liquid back into the crystallization reaction tank; a concentrated solid transfer pipe that supplies fine crystal particles concentrated and separated out by the liquid cyclone into the crystallization reaction tank; and chemical agent supply means for supplying a chemical agent required for the crystallization reaction into the circulating water.

48. The apparatus according to above item 47, having a liquid cyclone outflow water transfer pipe that supplies a part of the outflow water from the liquid cyclone into an upper portion of the crystallization reaction tank.

49. The apparatus according to above item 47 or 48, further having a seed crystal production tank, wherein the liquid-to-be-treated supply pipe and the circulating water supply pipe are also connected to the seed crystal production tank, and further having a fine crystal particle transfer pipe that transfers the fine crystal particles concentrated and separated out by the liquid cyclone into the seed crystal production tank, and a seed crystal transfer pipe that transfers seed crystals grown in the seed crystal production tank into the crystallization reaction tank.

50. The apparatus according to any of above items 47 through 49, wherein the liquid-to-be-treated supply pipe and the circulating water supply pipe are connected to the crystallization reaction tank tangentially to a transverse section of the crystallization reaction tank.

51. The apparatus according to any of above items 47 through 50, further having an air supply pipe that supplies air into a central portion of the transverse section of the crystallization reaction tank.

52. The apparatus according to any of above items 47 through 51, wherein the crystallization reaction tank is a vessel of a shape in which the transverse section of a lower portion is smaller than the transverse section of an upper portion, and the liquid-to-be-treated supply pipe and the circulating water supply pipe are connected to the lower portion of the crystallization reaction tank.

53. The apparatus according to any of above items 47 through 52, wherein the crystallization reaction tank is a vessel of which a lowermost portion has an inverted conical shape.

54. The apparatus according to any of above items 47 through 53, wherein the liquid-to-be-treated supply pipe and the circulating water supply pipe are connected to the seed crystal production tank tangentially to a transverse section of the seed crystal production tank.

55. The apparatus according to any of above items 47 through 54, further having an air supply pipe that supplies air into a central portion of the transverse section of the seed crystal production tank.

56. The apparatus according to any of above items 47 through 55, wherein the seed crystal production tank is a vessel of a shape in which the transverse section of a lower portion is smaller than the transverse section of an upper portion, and the liquid-to-be-treated supply pipe and the circulating water supply pipe are connected to the lower portion of the seed crystal production tank.

57. The apparatus according to any of above items 47 through 56, wherein the seed crystal production tank is a vessel of which a lowermost portion has an inverted conical shape.

58. The apparatus according to any of above items 47 through 57, having crystal recovery means for recovering grown crystal particles from the crystallization reaction tank.

59. An apparatus for removing ions to be removed in a liquid to be treated by crystallizing out crystal particles of a poorly soluble salt of the ions to be removed in the liquid to be treated through a crystallization reaction, which comprises: a crystallization reaction tank; a liquid-to-be-treated supply pipe that supplies the liquid to be treated into the crystallization reaction tank; a treated liquid discharge pipe that leads out a treated liquid flowing out from the crystallization reaction tank; a circulating water supply pipe that branches off from the treated liquid discharge pipe and feeds the treated liquid back into the crystallization reaction tank; and chemical agent supply means for supplying a chemical agent required for the crystallization reaction and an acid into the circulating water.

60. The apparatus according to above item 59, having an adjustment tank that receives the circulating water branched off from the treated liquid and then supplies the circulating water into the crystallization reaction tank, wherein the chemical agent required for the crystallization reaction and the acid are supplied into the adjustment tank.

61. The apparatus according to above item 59 or 60, further having a seed crystal production tank, wherein the liquid-to-be-treated supply pipe and the circulating water supply pipe are also connected to the seed crystal production tank, and further having a fine crystal particle transfer pipe that transfers fine crystal particles in the crystallization reaction tank into the seed crystal production tank from the crystallization reaction tank, and a seed crystal transfer pipe that transfers seed crystals grown in the seed crystal production tank into the crystallization reaction tank.

62. The apparatus according to any of above items 59 through 61, wherein the liquid-to-be-treated supply pipe and the circulating water supply pipe are connected to the crystallization reaction tank tangentially to a transverse section of the crystallization reaction tank.

63. The apparatus according to any of above items 59 through 62, further having an air supply pipe that supplies air into a central portion of the transverse section of the crystallization reaction tank.

64. The apparatus according to any of above items 59 through 63, wherein the crystallization reaction tank is a vessel of a shape in which the transverse section of a lower portion is smaller than the transverse section of an upper portion, and the liquid-to-be-treated supply pipe and the circulating water supply pipe are connected to the lower portion of the crystallization reaction tank.

65. The apparatus according to any of above items 59 through 64, wherein the crystallization reaction tank is a vessel of which a lowermost portion has an inverted conical shape.

66. The apparatus according to any of above items 61 through 65, wherein the liquid-to-be-treated supply pipe and the circulating water supply pipe are connected to the seed crystal production tank tangentially to a transverse section of the seed crystal production tank.

67. The apparatus according to any of above items 61 through 66, further having an air supply pipe that supplies air into a central portion of the transverse section of the seed crystal production tank.

68. The apparatus according to any of above items 61 through 67, wherein the seed crystal production tank is a vessel of a shape in which the transverse section of a lower portion is smaller than the transverse section of an upper portion, and the liquid-to-be-treated supply pipe and the circulating water supply pipe are connected to the lower portion of the seed crystal production tank.

69. The apparatus according to any of above items 61 through 68, wherein the seed crystal production tank is a vessel of which a lowermost portion has an inverted conical shape.

70. The apparatus according to any of above items 59 through 69, having crystal recovery means for recovering grown crystal particles from the crystallization reaction tank.

71. The apparatus according to any of above items 37 through 70, wherein phosphorus is removed from the liquid to be treated, which contains phosphorus and ammonia nitrogen, by crystallizing out magnesium ammonium phosphate from the liquid to be treated.

72. The apparatus according to any of above items 37 through 70, wherein phosphorus is removed from the liquid to be treated, which contains phosphorus, by crystallizing out hydroxyapatite from the liquid to be treated.

73. The apparatus according to any of above items 37 through 70, wherein fluorine is removed from the liquid to be treated, which contains fluoride ions, by crystallizing out calcium fluoride from the liquid to be treated.

74. The apparatus according to any of above items 37 through 70, wherein calcium is removed from the liquid to be treated, which contains calcium ions, by crystallizing out calcium carbonate from the liquid to be treated.

75. The apparatus according to any of above items 37 through 70, wherein carbonate ions are removed from the liquid to be treated, which contains carbonate ions, by crystallizing out calcium carbonate from the liquid to be treated.

Following is a more concrete description of various embodiments of the present invention through examples.

Example 1

In the present example, using the treatment process shown in FIG. 1, an experiment was carried out in which phosphorus was recovered by producing MAP crystal particles from dehydration filtrate from anaerobic digestion (hereinafter referred to as the 'raw water'). The treatment apparatus used in the present example comprised a crystallization reaction tank 1 and a treated water storage tank 8. The crystallization reaction tank 1 was of a shape having a reaction portion (a lower portion comprising an inverted conical portion and a portion having a small diameter), and a settling portion (an upper portion comprising a portion having a large diameter).

The dephosphorization process operating conditions are shown in Table 1, and the water quality for the raw water 2 and the treated water 6 is shown in Table 2. Note that as the experimental apparatus, one made of an acrylic resin was used, so that the state of fluidizing of the crystal particles in the crystallization reaction tank could be checked.

The raw water 2, and the circulating water 3 obtained by drawing out a part of the treated water, were supplied into the inverted conical portion of the crystallization reaction tank 1 tangentially to a transverse section of the tank as shown in FIG. 2. The diameter of each of the raw water supply pipe 12 and the circulating water supply pipe 13 was set to 20 mm, and the linear supply rate to 0.44 m/s (0.5 m$^3$/hr) for the raw water and 2.2 m/s (2.5 m$^3$/hr) for the circulating water. The raw water supply pipe 12 and the circulating water supply pipe 13 were connected at the same transverse section of the crystallization reaction tank 1 (referred to as the 'transverse section at the connection site'). The diameter of the transverse section at the connection site was 150 mm. The linear flow rate for 1 second of the raw water 2 and the circulating water 3 combined was 5.6 times the circumference of the transverse section at the connection site. As shown in FIG. 2, the connection angle between the raw water supply pipe 12 and the circulating water supply pipe 13 was 180°.

The magnesium component 9 was supplied into the treated water storage tank 8, and the alkali 4 was supplied into the raw water supply pipe 12. A 3% magnesium ion solution was used as the magnesium component, and a 25% caustic soda solution was used as the alkali. The amount added of the magnesium component was controlled such that the Mg/P weight ratio was 1.0, and the addition of the alkali was subjected to on-off control using a pH control mechanism installed in the reactor such that the pH in the reactor was in a range of 7.9 to 8.1.

The lower end of the air supply pipe 15 was positioned 25 cm above the connection position of the raw water and circulating water supply pipes. The air supply amount was made to be 10 L/min.

T-P was 25 mg/L for the treated water compared with 280 mg/L for the raw water, and hence the phosphorus recovery rate calculated from the water quality was 91%, showing that the phosphorus was recovered well. The state of fluidizing of the crystal particles in the reactor was good, and all of the crystal particles at the transverse section at the site of introduction of the raw water and the circulating water were fluidized uniformly, with no dead zones being observed. The operating conditions, and the water quality and so on are shown in Table 1 and Table 2.

Table 1:

| Operating conditions | | | |
|---|---|---|---|
| <Reactor specifications> | | | |
| Reaction portion | Diameter | mm | 350 |
| | Height | m | 2 |
| Settling portion | Diameter | mm | 800 |
| | Height | m | 1 |
| Raw water supply pipe | Diameter | mm | 20 |
| Circulating water supply pipe | Diameter | mm | 20 |
| <Water passing conditions> | | | |
| Raw water flow rate | | m$^3$/hr | 0.5 |
| Circulating water flow rate | | m$^3$/hr | 2.5 |
| LV | Reaction portion | m/hr | 30 |
| | Settling portion | m/hr | 8 |
| Air amount | | L/min | 10 |
| MAP particle diameter | | mm | 0.5 |
| Packing height | | m | 1.2 |

Table 2:

| Water quality (Example 1) | | | |
|---|---|---|---|
| | | Raw water | Treated water |
| PH | - | 8.0 | 8.0 |
| T-P | mg/L | 280 | 25 |
| PO$_4$-P | mg/L | 260 | 8 |
| NH$_4$-N | mg/L | 1000 | 880 |
| Phosphorus recovery rate | % | | 91 |

Comparative Example 1

A water passing test was carried out using the same treatment process as in Example 1 under the same conditions as in Table 1, but with the structure of the crystallization reaction tank changed. In the crystallization reaction tank, as shown in FIG. 4, the direction of connection of each of the raw water supply pipe 12 and the circulating water supply pipe 13 was made to be at right angles to the transverse section of the crystallization reaction tank. That is, the raw water supply pipe 12 and the circulating water supply pipe 13 were each connected pointing toward the center of the crystallization reaction tank, with the connection angle therebetween being made to be 180°. As in Example 1, the diameter of each of the raw water supply pipe 12 and the circulating water supply pipe 13 was set to 20 mm, and the linear supply rate to 0.44 m/s (0.5 m$^3$/hr) for the raw water and 2.2 m/s (2.5 m$^3$/hr) for the circulating water. The raw water supply pipe 12 and the circulating water supply pipe 13 were connected at the same transverse section, and the diameter of the transverse section of the crystallization reaction tank at the connection site was 150 mm.

The magnesium component and alkali supply conditions were made to be the same as in Example 1. Supply of air was not carried out.

The treated water quality is shown in Table 3. T-P was 70 mg/L for the treated water compared with 280 mg/L for the raw water. The phosphorus recovery rate calculated from the water quality was 75%, which was 16 percentage points lower than in Example 1. The crystal particles in the crystallization reaction tank 1 were not fluidized in a direction 90° to the direction of connection of the raw water supply pipe 12 and the circulating water supply pipe 13, and hence dead zones were formed, and the state of fluidizing was not uniform.

Table 3:

| Water quality (Comparative Example 1) | | | |
|---|---|---|---|
| | | Raw water | Treated water |
| PH | - | 8.0 | 8.0 |
| T-P | Mg/L | 280 | 70 |
| PO$_4$-P | Mg/L | 260 | 7 |
| NH$_4$-N | Mg/L | 1000 | 860 |
| Phosphorus recovery rate | % | | 75 |

Comparative Example 2

In Comparative Example 2, under the water passing conditions of Comparative Example 1, the supply of air 5 was carried out. The air supply amount was made to be 10 L/min. Other conditions were the same as in Comparative Example 1.

The treated water quality is shown in Table 4. T-P was 50 mg/L for the treated water compared with 280 mg/L for the raw water, and hence the phosphorus recovery rate calculated from the water quality was 82%, which was 7 percentage points higher than in Comparative Example 1, but 9 percentage points lower than in Example 1. As in Comparative Example 1, the crystal particles in the crystallization reaction tank 1 were not fluidized in a direction 90° to the direction of connection of the raw water supply pipe 12 and the circulating water supply pipe 13, and hence dead zones were formed, and the state of fluidizing was not uniform.

Table 4:

| Water quality (Comparative Example 2) | | | |
|---|---|---|---|
| | | Raw water | Treated water |
| PH | - | 8.0 | 8.0 |
| T-P | mg/L | 280 | 50 |
| PO$_4$-P | mg/L | 260 | 8 |
| NH$_4$-N | mg/L | 1000 | 870 |
| Phosphorus recovery rate | % | | 82 |

Example 2

In the present example, using the treatment process shown in FIG. 5, an experiment was carried out in which phosphorus was recovered by producing MAP from dehydration filtrate from anaerobic digestion (raw water). The treatment apparatus comprised a seed crystal production tank 31, a MAP crystallization reaction tank 1, and an Mg-dissolving tank 8.

The dephosphorization process operating conditions are shown in Table 5, and the water quality for the raw water 2 and the treated water 6 is shown in Table 6. Note that as the experimental apparatus, one made of an acrylic resin was used, so that the state of fluidizing of the crystal particles in the crystallization reaction tank could be checked.

When operation was commenced, seed crystals (MAP particles) of mean particle diameter 0.5 mm that had been prepared in advance were packed into the MAP crystallization reaction tank 1 to a packing height of 2.0 m.

The method for operation after stable operation had been achieved was as follows.

Fine MAP crystal particles floating in the upper portion of the MAP crystallization reaction tank 1 were transferred into the seed crystal production tank 31 via the fine MAP crystal transfer pipe 37 once every three days. At the same time as transferring in the fine MAP crystal particles, all of the seed crystals that had been produced in the seed crystal production tank 31 were fed back into the MAP crystallization reaction tank 1 using the air lift pump 38 installed in the seed crystal production tank 31. In the MAP crystallization reaction tank 1, product crystals 7 were recovered once per day using the air lift pump 17 installed in the MAP crystallization reaction tank 1.

In the MAP crystallization reaction tank 1, the raw water 2, and the circulating water 3 obtained by drawing out a part of the treated water, were supplied into the inverted conical portion of the crystallization reaction tank tangentially to a transverse section of the tank as shown in FIG. 6. The diameter of each of the raw water supply pipe 12 and the circulating water supply pipe 13 was set to 20 mm, and the linear supply rate to 0.44 m/s (0.5 m$^3$/hr) for the raw water and 2.2 m/s (2.5 m$^3$/hr) for the circulating water. The raw water supply pipe 12 and the circulating water supply pipe 13 were connected at the same transverse section (diameter of transverse section 150 mm). The linear flow rate for 1 second of the raw water 2 and the circulating water 3 combined was 5.2 times the circumference of the transverse section at the connection site. As shown in FIG. 6, the connection angle between the raw water supply pipe 12 and the circulating water supply pipe 13 was 180°.

The magnesium component 9 was supplied into the circulating water supply pipe 13, and the alkali 4 was supplied into the raw water supply pipe 12. A 3% magnesium ion (magnesium chloride) solution was used as the magnesium component, and a 25% caustic soda solution was used as the alkali. The amount added of the magnesium component was controlled such that the Mg/P weight ratio was 1.0, and the addition of the alkali was subjected to on-off control using a pH control mechanism installed in the reactor such that the pH was in a range of 7.9 to 8.1.

The outlet of the air supply pipe 15 was positioned 25 cm above the connection position of the raw water supply pipe 12 and the circulating water supply pipe. The air amount was made to be 10 L/min.

Regarding the average water quality over one to two months after commencing operation, T-P was 25 mg/L for the treated water compared with 300 mg/L for the raw water, and hence the phosphorus recovery rate calculated from the water quality was 92%, showing that the phosphorus was recovered well. The mean particle diameter of the seed crystals fed back into the MAP crystallization reaction tank 1 from the seed crystal production tank 31 was approximately 0.3 mm, and the particle diameter of the product crystals 7 was approximately 0.6 mm, the particle diameter being stable with no great variation. Moreover, the state of fluidizing of the crystal particles in the crystallization reaction tank 1 was good, and all of the crystal particles at the transverse section where the raw water 2 and the circulating water 3 were connected in were fluidized uniformly, with no dead zones being observed.

Table 5:

| Apparatus specifications and operating conditions | | | |
|---|---|---|---|
| <Apparatus specifications> | | | |
| · MAP crystallization reaction tank | | | |
| Reaction portion | Diameter | mm | 350 |
| | Height | m | 2 |
| Settling portion | Diameter | mm | 800 |
| | Height | m | 1 |
| Raw water supply pipe | Diameter | mm | 20 |
| Circulating water supply pipe | Diameter | mm | 20 |
| · Seed crystal production tank | | | |
| Reaction portion (cum settling | Diameter | mm | 250 |
| portion) | Height | m | 2 |
| Raw water supply pipe | Diameter | mm | 10 |
| Circulating water supply pipe | Diameter | mm | 10 |
| <Water passing conditions> | | | |
| · MAP crystallization reaction tank | | | |
| Raw water flow rate | | m$^3$/hr | 1 |
| Circulating water flow rate | | m$^3$/hr | 2 |
| Air amount | | L/min | 10 |
| MAP particle diameter | | mm | 0.5 |

Table 5: (continued)

| Apparatus specifications and operating conditions | | |
|---|---|---|
| <Apparatus specifications> | | |
| <Water passing conditions> | | |
| Packing height | m | 2 |
| · Seed crystal production tank | | |
| Raw water flow rate | $m^3$/hr | 0.1 |
| Circulating water flow rate | $m^3$/hr | 0.2 |
| Air amount | L/min | 1 |

Table 6:

| Water quality | | | |
|---|---|---|---|
| | | Raw water | Treated water |
| PH | - | 8.0 | 8.0 |
| T-P | mg/L | 300 | 25 |
| $PO_4$-P | mg/L | 285 | 9 |
| $NH_4$-N | mg/L | 1100 | 980 |
| Phosphorus recovery rate | % | | 92 |

Example 3

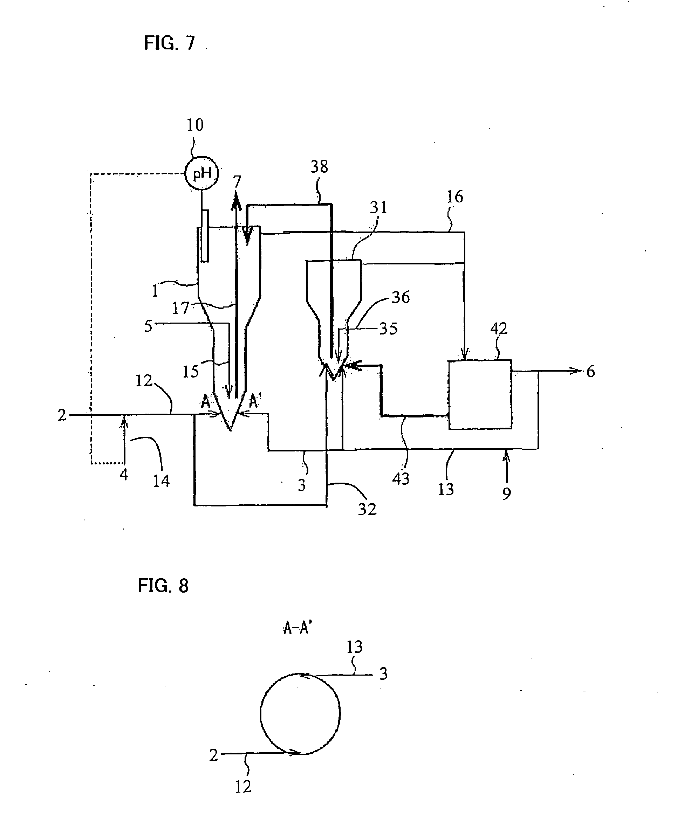

In the present example, using the treatment process shown in FIG. 7, phosphorus was recovered by producing MAP from anaerobic digestion filtrate (raw water). The treatment apparatus comprised a MAP crystallization reaction tank 1, a seed crystal production tank 31, and a fine MAP crystal recovery tank 42.

The dephosphorization process operating conditions are shown in Table 7, and the water quality for the raw water 2 and the treated water 6 is shown in Table 8. Note that as the experimental apparatus, one made of an acrylic resin was used, so that the state of fluidizing of the crystal particles in the crystallization reaction tank could be checked.

When operation was commenced, seed crystals (MAP particles) of mean particle diameter 0.5 mm that had been prepared in advance were packed into the MAP crystallization reaction tank to a packing height of 2.0 m.

The method for operation after stable operation had been achieved was as follows.

Fine MAP crystals flowing out from the upper portion of the MAP crystallization reaction tank 1 were recovered by simple settling in the fine MAP crystal recovery tank 42. The recovered fine MAP crystal particles were transferred into the seed crystal production tank 31 via a transfer pipe 43 once per week, and the fine MAP crystal particles were grown in the seed crystal production tank 31 so as to produce seed crystals. The seed crystals produced were fed back into the MAP crystallization reaction tank 1 once per week. The transfer of the fine MAP crystal particles from the fine MAP crystal recovery tank 42 into the seed crystal production tank 31 was carried out using a Mohno pump. The feeding back of the seed crystals from the seed crystal production tank 31 into the MAP crystallization reaction tank 1, and the withdrawal of the product crystals 7 from the MAP crystallization reaction tank were carried out using the air lift pumps 17 and 38.

As in Example 2, the raw water 2, and the circulating water 3 obtained by drawing out a part of the treated water, were supplied into the inverted conical portion of the crystallization reaction tank tangentially to a transverse section of the tank as shown in FIG. 8. The diameter of each of the raw water supply pipe 12 and the circulating water supply pipe 13 was set to 20 mm, and the linear supply rate to 0.44 m/s (0.5 $m^3$/hr) for the raw water and 2.2 m/s (2.5 $m^3$/hr) for the circulating water. The raw water supply pipe 12 and the circulating water supply pipe 13 were connected at the same transverse section, and the diameter of this transverse section was 150 mm. The linear flow rate for 1 second of the raw water 2 and the circulating water 3 combined was 5.2 times the circumference of the transverse section at the connection site. As shown in FIG. 8, the connection angle between the raw water supply pipe 12 and the circulating water supply pipe 13 was 180°.

The magnesium component 9 was supplied into the circulating water supply pipe 13, and the alkali 4 was supplied into the raw water supply pipe 12. A 3% magnesium ion solution (magnesium chloride) was used as the magnesium component, and a 25% caustic soda solution was used as the alkali. The amount added of the magnesium component was controlled such that the Mg/P weight ratio was 1.0, and the addition of the alkali was subjected to on-off control using a pH control mechanism installed in the reactor such that the pH in the reactor was in a range of 7.9 to 8.1.

The air supply pipe 15 was positioned 25 cm above the connection position of the raw water supply pipe 12 and the circulating water supply pipe 13. The air amount was made to be 10 L/min.

Regarding the average water quality over two months one to three months after commencing operation, T-P was 20 mg/L for the treated water compared with 270 mg/L for the raw water, and hence the phosphorus recovery rate calculated from the water quality was 92%, showing that the phosphorus was recovered well. The mean particle diameter of the seed crystals fed back into the MAP crystallization reaction tank 1 from the seed crystal production tank 31 was approximately 0.4 mm, and the particle diameter of the product crystals 7 was approximately 0.8 mm, the particle diameter being stable with no great variation. Moreover, the state of fluidizing of the crystal particles in the crystallization reaction tank 1 was good, and all of the crystal particles at the transverse section where the raw water supply pipe 12 and the circulating water supply pipe 13 were connected were fluidized uniformly, with no dead zones being observed.

Table 7:

| Apparatus specifications and operating conditions | | | |
|---|---|---|---|
| <Apparatus specifications> | | | |
| · MAP crystallization reaction tank | | | |
| Reaction portion (cum settling portion) | Diameter | mm | 350 |
| | Height | m | 4 |
| Raw water supply pipe | Diameter | mm | 20 |
| Circulating water supply pipe | Diameter | mm | 20 |
| ·Seed crystal production tank | | | |
| Reaction portion (cum settling portion) | Diameter | mm | 250 |
| | Height | m | 2 |
| Raw water supply pipe | Diameter | mm | 10 |
| Circulating water supply pipe | Diameter | mm | 10 |
| ·Fine MAP crystal recovery tank | | | |
| | Diameter | m | 1.5 |
| | Height | m | 1.5 |
| <Water passing conditions> | | | |
| · MAP crystallization reaction tank | | | |
| Raw water flow rate | | m$^3$/hr | 1 |
| Circulating water flow rate | | m$^3$/hr | 2 |
| Air amount | | L/min | 10 |
| MAP particle diameter | | mm | 0.5 |
| Packing height | | m | 2 |
| · Seed crystal production tank | | | |
| Raw water flow rate | | m$^3$/hr | 0.1 |
| Circulating water flow rate | | m$^3$/hr | 0.2 |
| Air amount | | L/min | 1 |

Table 8:

| Water quality | | | |
|---|---|---|---|
| | | Raw water | Treated water |
| PH | - | 8.0 | 8.0 |
| T-P | mg/L | 270 | 20 |
| $PO_4$-P | mg/L | 255 | 9 |
| $NH_4$-N | mg/L | 1000 | 900 |
| Phosphorus recovery rate | % | | 93 |

Comparative Example 3

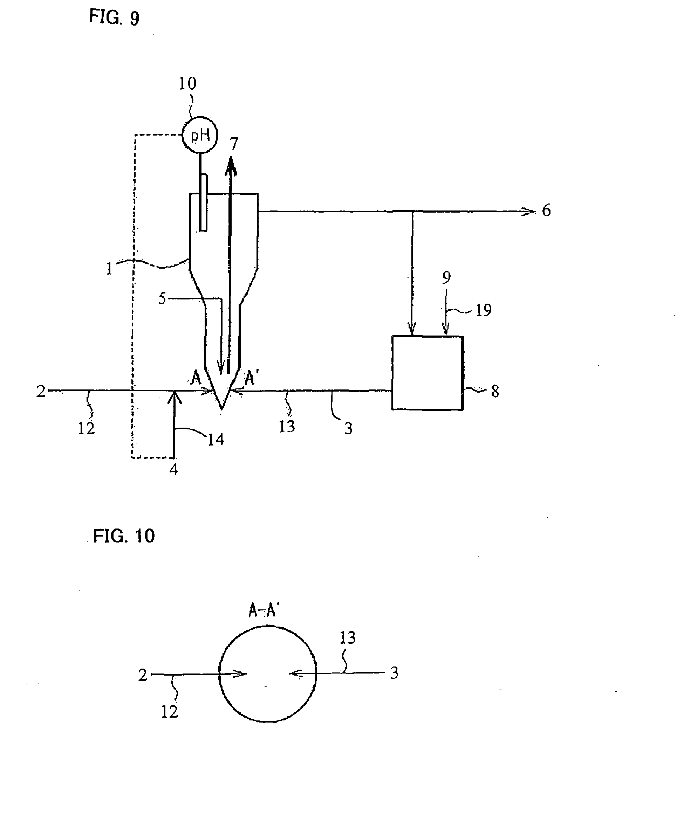

In the present comparative example, using the treatment process shown in FIG. 9, phosphorus was recovered by producing MAP from dehydration filtrate from anaerobic digestion (raw water). The treatment apparatus comprised a MAP crystallization reaction tank 1 having a reaction portion and a settling portion, and an Mg-dissolving tank 8.

The dephosphorization process operating conditions are shown in Table 9, and the water quality for the raw water 2 and the treated water 6 are shown in Table 10. Note that as the experimental apparatus, one made of an acrylic resin was used, so that the state of fluidizing of the crystal particles in the crystallization reaction tank 1 could be checked.

When operation was commenced, seed crystals (MAP particles) of mean particle diameter 0.5 mm that had been prepared in advance were packed into the MAP crystallization reaction tank 1 to a packing height of 2.0 m. In the MAP crystallization reaction tank 1, product crystals 7 were recovered once per day using the air lift pump 17 installed in the MAP crystallization reaction tank 1.

As shown in FIG. 10, the direction of connection of each of the raw water supply pipe 12 and the circulating water supply pipe 13 was made to be at right angles to the central axis in the transverse section of the crystallization reaction tank. The raw water supply pipe 12 and the circulating water supply pipe 13 were each connected pointing in the direction of the central portion of the transverse section, with the connection angle therebetween being made to be 180°. As in Examples 2 and 3, the diameter of each of the raw water supply pipe 12 and the circulating water supply pipe 13 was set to 20 mm, and the linear supply rate to 0.44 m/s (0.5 m³/hr) for the raw water and 2.2 m/s (2.5 m³/hr) for the circulating water. The raw water supply pipe 12 and the circulating water supply pipe 13 were connected at the same transverse section, and the diameter of this transverse section was 150 mm.

The form of supply of the magnesium component 9, the alkali 4, and the air 5 was made to be the same as in Example 2. The outlet of the air supply pipe was positioned 25 cm above the connection position of the raw water supply pipe 12 and the circulating water supply pipe 13. The air amount was made to be 10 L/min.

Regarding the average water quality over one month one to two months after commencing operation, T-P was 70 mg/L for the treated water compared with 290 mg/L for the raw water. The phosphorus recovery rate calculated from the water quality was 76%, which was 16 percentage points lower than in Example 1. The mean particle diameter of the seed crystals packed in was 0.5 mm, but this grew to 1.0 mm after one month of operation, and 2.5 mm after two months of operation. The crystal particles in the crystallization reaction tank were not fluidized in a direction 90° to the direction of connection of the raw water supply pipe 12 and the circulating water supply pipe 13, and hence dead zones were formed, and the state of fluidizing was not uniform.

Table 9:

| Apparatus specifications and operating conditions | | | |
|---|---|---|---|
| <Apparatus specifications> | | | |
| ·MAP crystallization reaction tank | | | |
| Reaction portion | Diameter | mm | 350 |
| | Height | m | 2 |
| Settling portion | Diameter | mm | 800 |
| | Height | m | 1 |
| Raw water supply pipe | Diameter | mm | 20 |

Table 9: (continued)

| Apparatus specifications and operating conditions | | | |
|---|---|---|---|
| <Apparatus specifications> | | | |
| ·MAP crystallization reaction tank | | | |
| Circulating water supply pipe | Diameter | mm | 20 |
| <Water passing conditions> | | | |
| ·MAP crystallization reaction tank | | | |
| Raw water flow rate | | $m^3/hr$ | 1 |
| Circulating water flow rate | | $m^3/hr$ | 2 |
| Air amount | | L/min | 10 |
| MAP particle diameter | | mm | 0.5 |
| Packing height | | m | 2 |

Table 10:

| Water quality | | | |
|---|---|---|---|
| | | Raw water | Treated water |
| PH | - | 8.0 | 8.0 |
| T-P | mg/L | 290 | 70 |
| $PO_4$-P | mg/L | 270 | 8 |
| $NH_4$-N | mg/L | 1100 | 980 |
| Phosphorus recovery rate | % | | 76 |

Example 4

In the present example, using the treatment process shown in FIG. 11, phosphorus was recovered by producing MAP from dehydration filtrate from anaerobic digestion (raw water). The treatment apparatus comprised a MAP crystallization reaction tank 1, and a liquid cyclone 51. The dephosphorization process operating conditions are shown in Table 11.

When operation was commenced, seed crystals (MAP particles) of mean particle diameter 0.5 mm that had been prepared in advance were packed into the MAP crystallization reaction tank 1 to a packing height of 2.0 m.

The method for operation after stable operation had been achieved was as follows.

The raw water 2 and the circulating water (a part of the liquid cyclone outflow water 56) 3 were passed in as an ascending flow from the bottom of the crystallization reaction tank 1. The magnesium source 9 was supplied into the circulating water supply pipe 13, and the alkali 4 was supplied into the raw water supply pipe 12. A magnesium chloride solution (magnesium ion concentration = 3%) was used as the magnesium source, and a 25% caustic soda solution was used as the alkali. The amount added of the magnesium chloride solution was controlled such that the Mg/P weight ratio was 1.0, and the addition of the caustic soda solution was subjected to on-off control using a pH measuring instrument installed in the reactor such that the pH was in a range of 7.9 to 8.1. The product crystals 7 were recovered at suitable times using the air lift pump 17.

A water level gauge (omitted from the drawing) was installed in an upper portion of the MAP crystallization reaction tank 1; if the water level in the crystallization reaction tank 1 dropped, then the liquid cyclone inflow pump was stopped, whereas if the water level rose, then the pump was restarted.

All of the outflow water 52 from the MAP crystallization reaction tank 1 was supplied into the liquid cyclone 51. Fine MAP crystal particles concentrated in the liquid cyclone 51 were fed back into the MAP crystallization reaction tank 1 via the transfer pipe 54.

The water quality for the raw water 2 and the treated water 6 is shown in Table 12.

Regarding the average water quality over two weeks after commencing operation, T-P was 25 mg/L for the treated water compared with 300 mg/L for the raw water, and hence the phosphorus recovery rate calculated from the water quality was 92%, showing that the phosphorus was recovered well. Whereas the mean particle diameter of the MAP crystal particles packed in initially was 0.5 mm, the particle diameter of the MAP crystal particles after two weeks was 0.8 mm.

Table 11:

| Operating conditions and treated water quality | | | |
|---|---|---|---|
| <Apparatus specifications> | | | |
| ·MAP crystallization reaction tank | | | |
| Reaction portion | Diameter | mm | 350 |
| | Height | m | 4 |
| ·Liquid cyclone | | | |
| Treated water inflow pipe | Diameter | mm | 51 |
| <Water passing conditions> | | | |
| ·MAP crystallization reaction tank | | | |
| Raw water flow rate | | $m^3/hr$ | 1 |
| Circulating water flow rate | | $m^3/hr$ | 2 |
| Air amount | | L/min | 10 |
| Packing height | | m | 2 |
| ·Liquid cyclone | | | |
| Flow rate | | $m^3/hr$ | 3 |

Table 12:

| Water quality | | | |
|---|---|---|---|
| | | Raw water | Treated water |
| PH | - | 8.0 | 8.0 |
| T-P | mg/L | 300 | 25 |
| $PO_4$-P | mg/L | 280 | 10 |
| $NH_4$-N | mg/L | 1000 | 860 |
| Phosphorus recovery rate | % | | 92 |

Example 5

In the present example, using the treatment apparatus shown in FIG. 12, phosphorus was recovered by producing MAP crystal particles from dehydration filtrate from anaerobic digestion (raw water). The treatment apparatus comprised a MAP crystallization reaction tank 1, and a liquid cyclone 51. The dephosphorization process operating conditions are shown in Table 13.

When operation was commenced, seed crystals (MAP particles) of mean particle diameter 0.5 mm that had been prepared in advance were packed into the MAP crystallization reaction tank 1 to a packing height of 2.0 m.

The method for operation after stable operation had been achieved was as follows.

The raw water 2 and the circulating water 3 were passed in as an ascending flow from the bottom of the crystallization reaction tank 1. The magnesium source 9 was supplied into the circulating water supply pipe 13, and the alkali 4 was supplied into the raw water supply pipe 12. A magnesium chloride solution (magnesium ion concentration = 3%) was used as the magnesium source 9, and a 25% caustic soda solution was used as the alkali. The amount added of the magnesium chloride solution was controlled such that the Mg/P weight ratio was 1.0, and the addition of the caustic soda solution was subjected to on-off control using a pH measuring instrument installed in the reactor such that the pH was in a range of 7.9 to 8.1. Air 5 was supplied into the crystallization reaction tank 1. The product crystals 7 were recovered at suitable times using the air lift pump 17.

The liquid in the MAP crystallization reaction tank 1 was supplied into the liquid cyclone 51 from an intermediate portion of the MAP crystallization reaction tank 1. A part of the liquid cyclone outflow water 56 was fed back into the MAP crystallization reaction tank 1 as the circulating water 3 after having had a magnesium solution 9 added thereto. Moreover, a part of the liquid cyclone outflow water 56 was fed back into the upper portion of the MAP crystallization reaction tank 1 via a transfer pipe 61, and a part of this fed back water was made to overflow at all times, whereby the water level was prevented from dropping. The overflow was taken out as the treated water 6.

Fine MAP crystal particles concentrated in the liquid cyclone 51 were fed back into the MAP crystallization reaction tank 1 via the transfer pipe 54.

The water quality for the raw water 2 and the treated water 6 is shown in Table 14.

Regarding the average water quality over two weeks after commencing operation, T-P was 20 mg/L for the treated water compared with 300 mg/L for the raw water, and hence the phosphorus recovery rate calculated from the water quality was 93%, showing that the phosphorus was recovered well. Whereas the mean particle diameter of the seed crystals packed in was 0.5 mm, the mean particle diameter of the MAP crystal particles in the crystallization reaction tank 1 after two weeks was 0.8 mm.

Table 13:

| Operating conditions and treated water quality | | | |
|---|---|---|---|
| <Apparatus specifications> | | | |
| ·MAP crystallization reaction tank | | | |
| Reaction portion | Diameter | mm | 350 |
| | Height | m | 4 |
| ·Liquid cyclone | | | |
| Treated water inflow pipe | Diameter | mm | 51 |
| <Water passing conditions> | | | |
| ·MAP crystallization reaction tank | | | |
| Raw water flow rate | | $m^3/hr$ | 1 |
| Circulating water flow rate | | $m^3/hr$ | 2 |
| Air amount | | L/min | 10 |
| MAP particle diameter | | mm | 0.5 |
| Packing height | | m | 2 |
| ·Liquid cyclone | | | |
| Flow rate | | $m^3/hr$ | 4 |

Table 14:

| Water quality | | | |
|---|---|---|---|
| | | Raw water | Treated water |
| PH | - | 8.0 | 8.0 |
| T-P | mg/L | 300 | 20 |
| $PO_4$-P | mg/L | 280 | 10 |
| $NH_4$-N | mg/L | 1000 | 860 |
| Phosphorus recovery rate | % | | 93 |

Comparative Example 4 (comparative example corresponding to Example 4)

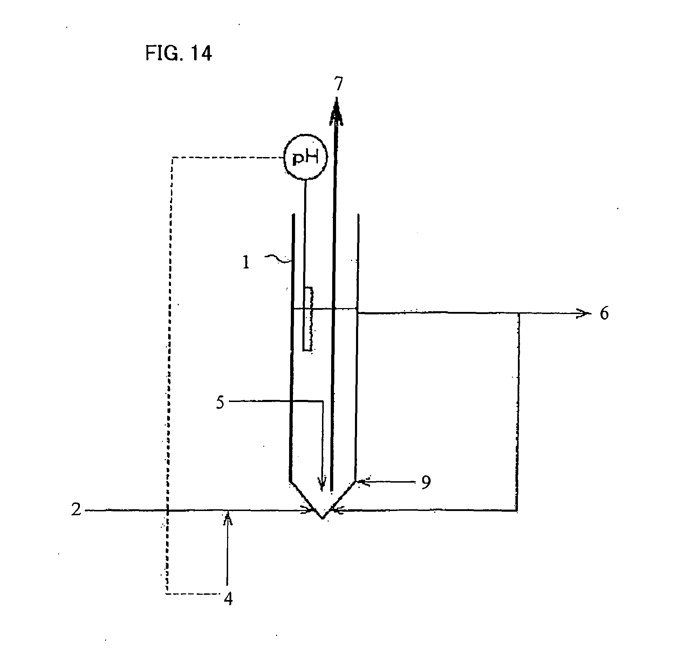

In the present comparative example, using the treatment apparatus not having a liquid cyclone shown in FIG. 14, phosphorus was recovered by producing MAP from dehydration filtrate from anaerobic digestion (raw water). The treatment apparatus substantially comprised a MAP crystallization reaction tank 1. Apart from not using a liquid cyclone, the conditions were made to be the same as in Example 4.

The water quality for the raw water 2 and the treated water 6 is shown in Table 15.

Regarding the average water quality over two weeks after commencing operation, T-P was 65 mg/L for the treated water compared with 300 mg/L for the raw water, and hence the phosphorus recovery rate calculated from the water quality was 78%. The difference between T-P for the treated water and $PO_4$-P for the treated water is mainly accounted for by phosphorus in the fine MAP, and this amount was high at 55 mg/L.

Table 15:

| Water quality | | | |
|---|---|---|---|
| | | Raw water | Treated water |
| PH | - | 8.0 | 8.0 |
| T-P | mg/L | 300 | 65 |
| $PO_4$-P | mg/L | 280 | 10 |
| $NH_4$-N | mg/L | 1000 | 860 |
| Phosphorus recovery rate | % | | 78 |

Example 6

In the present example, using the treatment apparatus shown in FIG. 15, phosphorus was recovered by producing MAP from dehydration filtrate from anaerobic digestion (raw water). The treatment apparatus comprised a MAP crystallization reaction tank 1, a seed crystal production tank 31, and a liquid cyclone 51. The dephosphorization process operating conditions are shown in Table 16.

When operation was commenced, seed crystals (MAP particles) of mean particle diameter 0.5 mm that had been prepared in advance were packed into the MAP crystallization reaction tank 1 to a packing height of 2.0 m.

The method for operation after stable operation had been achieved was as follows.

Raw water 2 and circulating water 3 were passed in as an ascending flow from the bottom of each of the crystallization reaction tank 1 and the seed crystal production tank 31. The magnesium component 9 was supplied into the circulating water supply pipe 13, and the alkali 4 was supplied into the raw water supply pipe 12. A 3% magnesium ion solution was used as the magnesium component, and a 25% caustic soda solution was used as the alkali. The amount added of the magnesium was controlled such that the Mg/P weight ratio was 1.0, and the addition of the alkali was subjected to on-off control using a pH measuring instrument installed in the reactor such that the pH was in a range of 7.9 to 8.1. Air 5 and 35 were supplied into the crystallization reaction tank 1 and the seed crystal production tank 31. The product crystals 7 were recovered at suitable times using the air lift pump 17. All of the outflow water 52 from the MAP crystallization reaction tank 1 was supplied into the liquid cyclone 51. A part of the fine MAP crystal particles concentrated in the liquid cyclone 51 were transferred into the seed crystal production tank 31, and the remainder were fed back into the MAP crystallization reaction tank 1.

Raw water 2, circulating water 3, and air 35 were supplied into the seed crystal production tank 31. Seed crystals were produced by growing the fine MAP crystal particles in the seed crystal production tank 31. The seed crystals were fed back into the MAP crystallization reaction tank 1 via a transfer pipe 38 once every three days.

The water quality for the raw water 2 and the treated water 6 is shown in Table 17.

Regarding the average water quality over one month one to two months after commencing operation, T-P was 22 mg/L for the treated water compared with 300 mg/L for the raw water, and hence the phosphorus recovery rate calculated from the water quality was 93%, showing that the phosphorus was recovered well. The mean particle diameter of the seed crystals fed back into the MAP crystallization reaction tank 1 from the seed crystal production tank 31 was approximately 0.3 mm, and the mean particle diameter of the product crystals 7 was approximately 0.6 mm, the particle diameter being stable with no great variation.

Table 16:

| Operating conditions and treated water quality | | | |
|---|---|---|---|
| <Apparatus specifications> | | | |
| ·MAP crystallization reaction tank | | | |
| Reaction portion | Diameter | mm | 350 |
| | Height | m | 4 |
| ·Liquid Cyclone | | | |
| Treated water inflow pipe | Diameter | Mm | 51 |
| ·Seed crystal production tank | | | |
| Reaction portion (cum settling | Diameter | Mm | 250 |
| portion) | Height | M | 2 |
| <Water passing conditions> | | | |
| ·MAP crystallization reaction tank | | | |
| Raw water flow rate | | $m^3/hr$ | 1 |
| Circulating water flow rate | | $m^3/hr$ | 2 |
| Air amount | | L/min | 10 |
| Packing height | | m | 2 |
| ·Seed crystal production tank | | | |
| Raw water flow rate | | $m^3/hr$ | 0.1 |
| Circulating water flow rate | | $m^3/hr$ | 0.2 |
| Air amount | | L/min | 1 |
| ·Liquid cyclone | | | |
| Flow rate | | $m^3/hr$ | 3 |

Table 17:

| Water quality | | | |
|---|---|---|---|
| | | Raw water | Treated water |
| PH | - | 8.0 | 8.0 |
| T-P | mg/L | 300 | 22 |
| $PO_4$-P | mg/L | 280 | 10 |
| $NH_4$-N | mg/L | 1000 | 800 |
| Phosphorus recovery rate | % | | 93 |

Example 7

In the present example, using the treatment apparatus shown in FIG. 16, phosphorus was recovered by producing MAP from dehydration filtrate from anaerobic digestion (raw water). The treatment apparatus comprised a MAP crystallization reaction tank 1, a seed crystal production tank 31, and a liquid cyclone 51. The dephosphorization process operating conditions are shown in Table 18.

When operation was commenced, seed crystals (MAP particles) of mean particle diameter 0.5 mm that had been prepared in advance were packed into the MAP crystallization reaction tank 1 to a packing height of 2.0 m.

The method for operation after stable operation had been achieved was as follows.

Raw water 2 and circulating water 3 were passed in as an ascending flow from the bottom of each of the crystallization reaction tank 1 and the seed crystal production tank 31. The magnesium component 9 was supplied into the circulating water supply pipe 13, and the alkali 4 was supplied into the raw water supply pipe 12. A 3% magnesium ion solution (magnesium chloride solution) was used as the magnesium component, and a 25% caustic soda solution was used as the alkali. The amount added of the magnesium was controlled such that the Mg/P weight ratio was 1.0, and the addition of the alkali was subjected to on-off control using a pH measuring instrument installed in the crystallization reaction tank such that the pH was in a range of 7.9 to 8.1. Air 5 and 35 were supplied into the crystallization reaction tank 1 and the seed crystal production tank 31. The product crystals 7 were recovered at suitable times using the air lift pump 17.

All of the outflow water 52 from the MAP crystallization reaction tank 1 was supplied into the liquid cyclone 51. A part of the liquid cyclone outflow water was fed back into the upper portion of the MAP crystallization reaction tank 1. A part of the fine MAP concentrated in the liquid cyclone 51 was transferred into the seed crystal production tank 31, and the remainder was fed back into the MAP crystallization reaction tank 1. Raw water 2, circulating water 3, and air 35 were supplied into the seed crystal production tank 31. Seed crystals were produced by growing the fine MAP crystal particles in the seed crystal production tank 31. The seed crystals were fed back into the MAP crystallization reaction tank 1 via a transfer pipe 38 once every three days.

The water quality for the raw water 2 and the treated water 6 is shown in Table 19.

Regarding the average water quality over one month one to two months after commencing operation, T-P was 20 mg/L for the treated water compared with 300 mg/L for the raw water, and hence the phosphorus recovery rate calculated from the water quality was 93%, showing that the phosphorus was recovered well. The mean particle diameter of the seed crystals fed back into the MAP crystallization reaction tank 1 from the seed crystal production tank 31 was approximately 0.3 mm, and the mean particle diameter of the product crystals 7 was approximately 0.6 mm, the particle diameter being stable with no great variation.

Table 18:

| Operating conditions and treated water quality | | | |
|---|---|---|---|
| <Apparatus specifications> | | | |
| ·MAP crystallization reaction tank | | | |
| Reaction portion | Diameter | mm | 350 |
| | Height | m | 4 |
| ·Liquid Cyclone | | | |
| Treated water inflow pipe | Diameter | mm | 51 |
| ·Seed crystal production tank | | | |
| Reaction portion (cum settling portion) | Diameter | mm | 250 |
| | Height | m | 2 |
| <Water passing conditions> | | | |
| ·MAP crystallization reaction tank | | | |
| Raw water flow rate | | m³/hr | 1 |
| Circulating water flow rate | | m³/hr | 2 |
| Treated water feedback rate | | m³/hr | 1 |
| Air amount | | L/min | 10 |
| MAP particle diameter | | mm | 0.5 |
| Packing height | | m | 2 |
| ·Seed crystal production tank | | | |
| Raw water flow rate | | M³/hr | 0.1 |
| Circulating water flow rate | | M³/hr | 0.2 |
| Air amount | | L/min | 1 |

Table 18: (continued)

| Operating conditions and treated water quality | | |
|---|---|---|
| <Water passing conditions> | | |
| ·Liquid cyclone | | |
| Flow rate | M$^3$/hr | 4 |

Table 19:

| Water quality | | | |
|---|---|---|---|
| | | Raw water | Treated water |
| PH | - | 8.0 | 8.0 |
| T-P | mg/L | 300 | 20 |
| PO$_4$-P | mg/L | 280 | 8 |
| NH$_4$-N | mg/L | 1000 | 800 |
| Phosphorus recovery rate | % | | 93 |

Example 8

In the present example, using the treatment apparatus shown in FIG. 15, phosphorus was recovered by producing HAP from separated water (raw water) into which phosphorus had been discharged from surplus sludge. The treatment apparatus comprised a HAP crystallization reaction tank 1, a seed crystal production tank 31, and a liquid cyclone 51. The dephosphorization process operating conditions are shown in Table 20.

When operation was commenced, seed crystals (rock phosphate) of mean particle diameter 0.2 mm that had been prepared in advance were packed into the HAP crystallization reaction tank 1 to a packing height of 2.0 m.

The method for operation after stable operation had been achieved was as follows.

Raw water 2 and circulating water 3 were passed in as an ascending flow from the bottom of each of the crystallization reaction tank 1 and the seed crystal production tank 31. A calcium component was supplied into the circulating water supply pipe 13, and an alkali was supplied into the raw water supply pipe 12. A 3% calcium ion solution was used as the calcium component, and a 25% caustic soda solution was used as the alkali. The amount added of the calcium component was controlled such that the Ca/P weight ratio was 3.0, and the addition of the alkali was subjected to on-off control using a pH measuring instrument installed in the reactor such that the pH was in a range of 8.9 to 9.1. Air 5 and 35 were supplied into the crystallization reaction tank 1 and the seed crystal production tank 31. The product crystals 7 were recovered at suitable times using the air lift pump 17.

All of the outflow water 52 from the HAP crystallization reaction tank 1 was supplied into the liquid cyclone 51. A part of the fine HAP crystal particles concentrated in the liquid cyclone 51 were transferred into the seed crystal production tank, and the remainder were fed back into the HAP crystallization reaction tank 1. Raw water 2, circulating water 3, and air 35 were supplied into the seed crystal production tank 31. Seed crystals were produced by growing the fine HAP crystal particles in the seed crystal production tank 31. The seed crystals were fed back into the HAP crystallization reaction tank 1 via a transfer pipe 38 once every ten days. Moreover, rock phosphate of particle diameter approximately 0.05 mm was added into the seed crystal production tank 31 at suitable times.

The water quality for the raw water 2 and the treated water 6 is shown in Table 21.

Regarding the average water quality over two months two to four months after commencing operation, T-P was 15 mg/L for the treated water compared with 100 mg/L for the raw water, and hence the phosphorus recovery rate calculated from the water quality was 85%, showing that the phosphorus was recovered well. The mean particle diameter of the seed crystals fed back into the HAP crystallization reaction tank 1 from the seed crystal production tank 31 was approximately 0.1 mm, and the mean particle diameter of the product crystals 7 was approximately 0.25 mm, the particle diameter being stable with no great variation.

Table 20:

| Operating conditions and treated water quality | | | |
|---|---|---|---|
| <Apparatus specifications> | | | |
| ·MAP crystallization reaction tank | | | |
| Reaction portion | Diameter | mm | 350 |
| | Height | m | 4 |
| ·Liquid Cyclone | | | |
| Treated water inflow pipe | Diameter | mm | 51 |
| Seed crystal production tank | | | |
| Reaction portion (cum settling portion) | Diameter | mm | 250 |
| | Height | m | 2 |
| <Water passing conditions> | | | |
| ·MAP crystallization reaction tank | | | |
| Raw water flow rate | | $m^3$/hr | 0.5 |
| Circulating water flow rate | | $m^3$/hr | 2.5 |
| Air amount | | L/min | 10 |
| Rock phosphate particle diameter | | mm | 0.2 |
| Packing height | | m | 2 |
| ·Seed crystal production tank | | | |
| Raw water flow rate | | $m^3$/hr | 0.1 |
| Circulating water flow rate | | $m^3$/hr | 0.2 |
| Air amount | | L/min | 1 |
| ·Liquid cyclone | | | |
| Flow rate | | $m^3$/hr | 3 |

Table 21:

| Water quality | | | |
|---|---|---|---|
| | | Raw water | Treated water |
| PH | - | 7.3 | 9.0 |
| T-P | mg/L | 100 | 15 |
| $PO_4$-P | mg/L | 90 | 2 |
| Phosphorus recovery rate | % | | 85 |

Comparative Example 5 (comparative example corresponding to Example 6)

In the present comparative example, using the treatment apparatus shown in FIG. 18, phosphorus was recovered by producing MAP from dehydration filtrate from anaerobic digestion (raw water). The treatment apparatus comprised a MAP crystallization reaction tank 1, and a seed crystal production tank 31. The conditions were made to be the same as in Example 6, except that there was no liquid cyclone.

The water quality for the raw water 2 and the treated water 6 is shown in Table 22.

Regarding the average water quality over one month one to two months after commencing operation, T-P was 70 mg/L for the treated water compared with 300 mg/L for the raw water, and hence the phosphorus recovery rate calculated from the water quality was 77%. The difference between T-P for the treated water and $PO_4$-P for the treated water is mainly accounted for by phosphorus in the fine MAP, and this amount was high at 60 mg/L.

Table 22:

| Water quality | | | |
|---|---|---|---|
| | | Raw water | Treated water |
| PH | - | 8.0 | 8.0 |
| T-P | mg/L | 300 | 70 |
| $PO_4$-P | mg/L | 280 | 10 |
| $NH_4$-N | mg/L | 1000 | 800 |
| Phosphorus recovery rate | % | | 77 |

Comparative Example 6 (comparative example corresponding to Example 6)

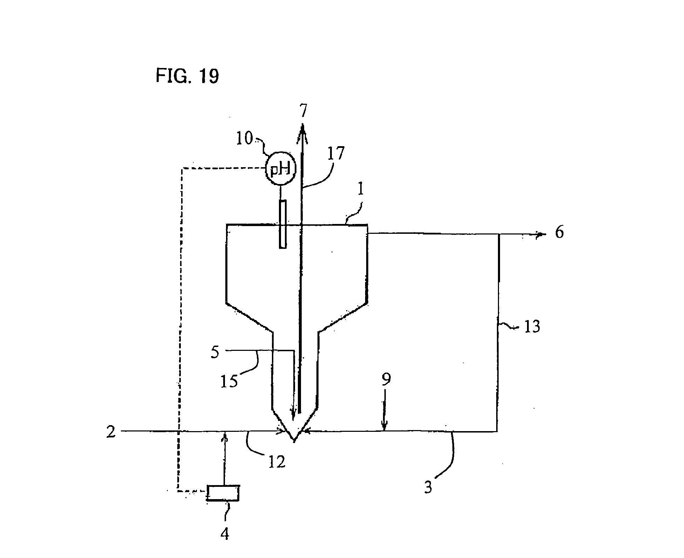

In the present comparative example, using the treatment apparatus shown in FIG. 19, phosphorus was recovered by producing MAP from dehydration filtrate from anaerobic digestion (raw water). The treatment apparatus comprised a crystallization reaction tank 1 having a reaction portion (a lower portion comprising a portion having a small diameter and an inverted conical portion), and a settling portion (an upper portion comprising a portion having a large diameter). The diameter of the reaction portion of the crystallization reaction tank 1 was made to be 350 mm, and the diameter of the settling portion was made to be 800 mm.

The dephosphorization process operating conditions are shown in Table 23.

When operation was commenced, seed crystals (MAP particles) of mean particle diameter 0.5 mm that had been prepared in advance were packed into the MAP crystallization reaction tank 1 to a packing height of 2.0 m. In the MAP crystallization reaction tank 1, product crystals 7 were recovered once per day using the air lift pump 17 installed in the MAP crystallization reaction tank 1. The supplying in of the magnesium component 9, the alkali 4, and the air 5 were as in Example 6. The lower end of the air supply pipe 15 was positioned 25 cm above the connection position of the raw water supply pipe and the circulating water supply pipe 13. The supply amount for the air 5 was made to be 10 L/min.

The water quality for the raw water 2 and the treated water 6 is shown in Table 24.

Regarding the average water quality over one month one to two months after commencing operation, T-P was 60 mg/L for the treated water compared with 300 mg/L for the raw water, and hence the phosphorus recovery rate calculated from the water quality was 80%, which was 13 percentage points lower than in Example 6. The mean particle diameter of the seed crystals packed in was 0.5 mm, but this grew to 2.3 mm after two months of operation. The diameter of the MAP crystallization reaction tank 1 was 0.35 m in Example 6, and was 0.8 m in the present Comparative Example 6, but the recovery rate was low even though the apparatus was large.

Table 23:

| Operating conditions and treated water quality | | | |
|---|---|---|---|
| <Apparatus specifications> | | | |
| ·MAP crystallization reaction tank | | | |
| Reaction portion | Diameter | mm | 350 |
| | Height | m | 2 |
| Settling portion | Diameter | mm | 800 |
| | Height | m | 1 |
| <Water passing conditions> | | | |
| ·MAP crystallization reaction tank | | | |
| Raw water flow rate | | $m^3$/hr | 1 |
| Circulating water flow rate | | $m^3$/hr | 2 |
| Air amount | | L/min | 10 |
| MAP particle diameter | | mm | 0.5 |

Table 23: (continued)

| Operating conditions and treated water quality | | |
|---|---|---|
| <Water passing conditions> | | |
| ·MAP crystallization reaction tank | | |
| Packing height | M | 2 |

Table 24:

| Water quality | | Raw water | Treated water |
|---|---|---|---|
| PH | - | 8.0 | 8.0 |
| T-P | mg/L | 300 | 60 |
| $PO_4$-P | mg/L | 280 | 8 |
| $NH_4$-N | mg/L | 1000 | 800 |
| Phosphorus recovery rate | % | | 80 |

Example 9

In the present example 9, using the treatment apparatus shown in FIG. 23, phosphorus was recovered by producing MAP from dehydration filtrate from anaerobic digestion (raw water). The treatment apparatus comprised a MAP crystallization reaction tank 1, and a circulating water adjustment tank 82. The dephosphorization process operating conditions are shown in Table 25, and the water quality for the raw water 2 and the treated water 6 is shown in Table 26. Magnesium hydroxide was used as the Mg component 83, and sulfuric acid was used as the acid 85.

When operation was commenced, seed crystals (MAP particles) of mean particle diameter 0.5 mm that had been prepared in advance were packed into the MAP crystallization reaction tank 1 to a packing height of 2.0 m.

The method for operation after stable operation had been achieved was as follows.

The raw water 2 and the circulating water 3 were passed in as an ascending flow from the bottom of the MAP crystallization reaction tank 1. MAP product crystals 7 grown in the MAP crystallization reaction tank 1 were recovered using the air lift pump 17 as appropriate. The amount of the magnesium hydroxide 83 added into the circulating water adjustment tank 82 was adjusted such that the raw water $PO_4$-P / added Mg weight ratio was 1.0. Moreover, a pH meter 10 was installed in the circulating water adjustment tank 82, and the addition of the sulfuric acid 85 was turned on and off in accordance with the output from the pH meter 10. The set value for the pH was made to be 8.0.

Regarding the average water quality over two weeks after commencing operation, as shown in Table 26, T-P was 32 mg/L for the treated water compared with 300 mg/L for the raw water, and hence the phosphorus recovery rate calculated from the water quality was 89%, showing that the phosphorus was recovered well.

Table 25:

| Operating conditions and treated water quality | | | |
|---|---|---|---|
| <Apparatus specifications> | | | |
| ·MAP crystallization reaction tank | | | |
| Reaction portion | Diameter | mm | 350 |
| | Height | m | 4 |
| Settling portion | Diameter | mm | 800 |
| | Height | m | 1 |
| ·pH adjustment tank | Volume | $m^3$ | 0.3 |

Table 25:   (continued)

| Operating conditions and treated water quality | | |
|---|---|---|
| <Water passing conditions> | | |
| ·MAP crystallization reaction tank | | |
| Raw water flow rate | m$^3$/hr | 0.8 |
| Circulating water flow rate | m$^3$/hr | 1.6 |
| MAP particle diameter | mm | 0.5 |
| Packing height | m | 2 |
| ·pH adjustment tank | | |
| Amount of magnesium hydroxide added | mg/L of raw water | 680 |

Table 26:

| Water quality | | | |
|---|---|---|---|
| | | Raw water | Treated water |
| PH | - | 8.0 | 8.0 |
| T-P | mg/L | 300 | 32 |
| PO$_4$-P | mg/L | 280 | 11 |
| NH$_4$-N | mg/L | 1000 | 870 |
| Phosphorus recovery rate | % | | 89 |

Example 10

In the present example 10, using the treatment apparatus shown in FIG. 20, phosphorus was recovered by producing MAP from dehydration filtrate from anaerobic digestion (raw water). The treatment apparatus comprised a MAP crystallization reaction tank 1, a seed crystal production tank 31, and a circulating water adjustment tank 82. The dephosphorization process operating conditions are shown in Table 27, and the water quality for the raw water 2 and the treated water 6 is shown in Table 28. Magnesium hydroxide was used as the Mg source 83, and sulfuric acid was used as the acid 85.

When operation was commenced, seed crystals (MAP particles) of mean particle diameter 0.5 mm that had been prepared in advance were packed into the MAP crystallization reaction tank 1 to a packing height of 2.0 m.

The method for operation after stable operation had been achieved was as follows.

Fine MAP crystal particles floating in the upper portion of the MAP crystallization reaction tank 1 were transferred into the seed crystal production tank 31 via the fine MAP crystal transfer pipe 37 once every three days. At the same time as transferring in the fine MAP crystal particles, all of the seed crystals that had been produced in the seed crystal production tank 31 were fed back into the MAP crystallization reaction tank 1 using the air lift pump 38 installed in the seed crystal production tank 31. In the MAP crystallization reaction tank 1, product crystals 7 were recovered once per day using the air lift pump 17 installed in the MAP crystallization reaction tank 1.

The amounts supplied in of the raw water 2 were MAP crystallization reaction tank : seed crystal production tank = 0.5 m$^3$/hr : 0.06 m$^3$/hr, and the amounts supplied in of the circulating water 3 were MAP crystallization reaction tank : seed crystal production tank = 1.0 m$^3$/hr : 0.12 m$^3$/hr.

The amount added of the magnesium hydroxide 83 was adjusted such that the raw water PO$_4$-P / added Mg weight ratio was 1.0. Moreover, a pH meter 10 was installed in the circulating water adjustment tank 82, and the addition of the sulfuric acid 85 was turned on and off in accordance with the output from the pH meter 10. The set value for the pH was made to be 8.0.

Regarding the average water quality over 1 month after commencing operation, as shown in Table 28, T-P was 30 mg/L for the treated water compared with 300 mg/L for the raw water, and hence the phosphorus recovery rate calculated from the water quality was 90%, showing that the phosphorus was recovered well.

Table 27:

| Operating conditions and treated water quality | | | |
|---|---|---|---|
| <Apparatus specifications> | | | |
| ·MAP crystallization reaction tank | | | |
| Reaction portion | Diameter | mm | 350 |
| | Height | m | 2 |
| Settling portion | Diameter | mm | 800 |
| | Height | m | 1 |
| ·Seed crystal production tank | | | |
| Reaction portion (cum settling portion) | Diameter | mm | 250 |
| | Height | m | 2 |
| ·pH adjustment tank | Volume | $m^3$ | 0.3 |
| <Water passing conditions> | | | |
| ·MAP crystallization reaction tank | | | |
| Raw water flow rate | | $m^3$/hr | 0.5 |
| Circulating water flow rate | | $m^3$/hr | 1.0 |
| MAP particle diameter | | mm | 0.5 |
| Packing height | | m | 2 |
| ·Seed crystal production tank | | | |
| Raw water flow rate | | $m^3$/hr | 0.06 |
| Circulating water flow rate | | $m^3$/hr | 0.12 |
| ·pH adjustment tank | | | |
| Amount of $Mg(OH)_2$ added | | mg/L of raw water | 680 |

Table 28:

| Water quality | | | |
|---|---|---|---|
| | | Raw water | Treated water |
| PH | - | 8.0 | 8.0 |
| T-P | mg/L | 300 | 30 |
| $PO_4$-P | mg/L | 280 | 10 |
| $NH_4$-N | mg/L | 1000 | 880 |
| Phosphorus recovery rate | % | | 90 |

Comparative Example 7

In the present Comparative Example 7, using the treatment apparatus shown in FIG. 24, phosphorus was recovered by producing MAP from dehydration filtrate from anaerobic digestion (raw water). The conditions were the same as in Example 9, except that there was no equipment for adding sulfuric acid.

The water quality for the raw water 2 and the treated water 6 is shown in Table 29.

Regarding the average water quality over 1 month after commencing operation, T-P was 70 mg/L for the treated water compared with 300 mg/L for the raw water, and hence the phosphorus recovery rate calculated from the water quality was 77%. The pH in the crystallization reaction tank 1 rose to 8.8, and much flocculated SS was seen, a part of which flowed out. Upon examining the flocculated SS, it was found that the main component thereof was MAP.

It is conjectured that many fine MAP crystal particles were produced and flocculated together due to the pH rising.

Table 29:

| Water quality | | | |
|---|---|---|---|
| | | Raw water | Treated water |
| PH | - | 8.0 | 8.8 |
| T-P | mg/L | 300 | 70 |
| $PO_4$-P | mg/L | 280 | 10 |
| $NH_4$-N | mg/L | 1000 | 880 |
| Phosphorus recovery rate | % | | 77 |

INDUSTRIAL APPLICABILITY

According to a first embodiment of the present invention, in a method and apparatus for removing ions to be removed in a liquid to be treated through a crystallization reaction, a chemical agent required for the crystallization reaction is added to and dissolved in a part of a treated liquid flowing out from a crystallization reaction tank, and the resulting solution is supplied into the crystallization reaction tank as a circulating liquid; here, the liquid to be treated and the circulating liquid are introduced into the crystallization reaction tank tangentially to a transverse section of the crystallization reaction tank. As a result, crystal particles are fluidized uniformly in the crystallization reaction tank, and the mixing together of substances involved in the reaction, and the contact between these involved substances and the crystal surfaces become very good, and hence the crystallization reaction, which involves mainly a crystal particle growth process, is promoted.

Moreover, according to a second embodiment of the present invention, in a method and apparatus for removing ions to be removed in a liquid to be treated through a crystallization reaction, an apparatus comprising a crystallization reaction tank and a liquid cyclone is used, treated liquid flowing out from the crystallization reaction tank is introduced into the liquid cyclone, fine crystal particles in the treated liquid are separated out and thus recovered in the liquid cyclone, a part or all of the recovered fine crystal particles are fed back into the crystallization reaction tank, and moreover a chemical agent required for the crystallization reaction is added to and dissolved in a part of outflow water from the liquid cyclone, and the resulting solution is supplied into the crystallization reaction tank as a circulating liquid. As a result, the fine crystal particles can be prevented from being discharged from the crystallization reaction tank to the outside, and moreover the fine crystal particles can be further grown in the crystallization reaction tank so that the amount recovered as product crystals can be increased; the phosphorus recovery rate is thus high, and moreover the apparatus can be made very compact.

Furthermore, by circulating a part of the outflow water from the liquid cyclone into an upper portion of the crystallization reaction tank, the water level balance for the total amount of raw water and circulating water in the crystallization reaction tank can be improved, and hence fluctuation in the liquid level in the crystallization reaction tank can be reduced, and thus feeding the fine crystal particle-containing liquid from the crystallization reaction tank into the liquid cyclone can be facilitated and breakdown of a transferring pump can be prevented from occurring, and moreover a water level gauge need not be installed.

Furthermore, according to a third embodiment of the present invention, in a method and apparatus for removing ions to be removed in a liquid to be treated through a crystallization reaction, a poorly soluble compound slurry is used as a chemical agent required for the crystallization reaction, the poorly soluble compound slurry and an acid are added to a part of a treated liquid flowing out from a crystallization reaction tank, and the resulting liquid is supplied into the crystallization reaction tank as a circulating liquid. As a result, an inexpensive poorly soluble compound can be used and can be easily dissolved so as to increase the concentration of ions to be removed in the liquid, whereby there can be provided a method and apparatus for removing the ions to be removed according to which there is no drop in the treatment performance.

**Claims**

1. A method for removing ions to be removed in a liquid to be treated by crystallizing out crystal particles of a poorly soluble salt of the ions to be removed in the liquid to be treated in a crystallization reaction tank, which comprises adding a chemical agent required for the crystallization reaction into a part of a treated liquid flowing out from the crystallization reaction tank and dissolving the chemical agent therein, and supplying the resulting solution into the crystallization reaction tank as a circulating liquid, wherein the liquid to be treated and the circulating liquid are introduced into the crystallization reaction tank tangentially to a transverse section of the crystallization reaction tank.

2. The method according to claim 1, wherein air is supplied into a central portion of the transverse section of the crystallization reaction tank.

3. The method according to claim 1 or 2, wherein a reaction vessel of a shape in which the transverse section of a lower portion is smaller than the transverse section of an upper portion is used as the crystallization reaction tank, and the liquid to be treated and the circulating liquid are introduced into the lower portion of the reaction tank.

4. The method according to any of claims 1 through 3, wherein a reaction vessel of which a lowermost portion has an inverted conical shape is used as the crystallization reaction tank.

5. The method according to any of claims 1 through 4, wherein the crystallization reaction tank and a seed crystal production tank are used, the liquid to be treated and the circulating liquid are supplied into the seed crystal production tank, and fine crystal particles in the liquid are taken out from the crystallization reaction tank and supplied into the seed crystal production tank, the fine crystal particles are grown in the seed crystal production tank to form seed crystals, and the seed crystals grown in the seed crystal production tank are supplied into the crystallization reaction tank.

6. A method for removing ions to be removed in a liquid to be treated by crystallizing out crystal particles of a poorly soluble salt of the ions to be removed in the liquid to be treated in a crystallization reaction tank, which comprises using an apparatus comprising the crystallization reaction tank and a liquid cyclone, introducing a treated liquid flowing out from the crystallization reaction tank into the liquid cyclone, separating out and recovering fine crystal particles in the treated liquid in the liquid cyclone, feeding a part or all of the recovered fine crystal particles back into the crystallization reaction tank, and moreover adding a chemical agent required for the crystallization reaction to a part of outflow water from the liquid cyclone and dissolving the chemical agent therein, and supplying the resulting solution into the crystallization reaction tank as a circulating liquid.

7. The method according to claim 6, wherein a part of the outflow water from the liquid cyclone is supplied into an upper portion of the crystallization reaction tank.

8. The method according to claim 6 or 7, further comprising using a seed crystal production tank, supplying a part or all of the fine crystal particles recovered in the liquid cyclone into the seed crystal production tank, growing the fine crystal particles in the seed crystal production tank to form seed crystals, and supplying the seed crystals grown in the seed crystal production tank into the crystallization reaction tank, and moreover adding the chemical agent required for the crystallization reaction to a part of the outflow water from the seed crystal production tank and the outflow water from the liquid cyclone and dissolving the chemical agent therein, and supplying the resulting solution into the crystallization reaction tank as a circulating liquid.

9. The method according to any of claims 6 through 8, wherein the liquid to be treated and the circulating liquid are introduced into the crystallization reaction tank tangentially to a transverse section of the crystallization reaction tank.

10. The method according to any of claims 6 through 9, wherein air is supplied into a central portion of the transverse section of the crystallization reaction tank.

11. The method according to any of claims 6 through 10, wherein a reaction vessel of a shape in which the transverse section of a lower portion is smaller than the transverse section of an upper portion is used as the crystallization reaction tank, and the liquid to be treated and the circulating liquid are introduced into the lower portion of the reaction tank.

12. The method according to any of claims 6 through 11, wherein a reaction vessel of which a lowermost portion has an inverted conical shape is used as the crystallization reaction tank.

13. A method for removing ions to be removed in a liquid to be treated by crystallizing out crystal particles of a poorly soluble salt of the ions to be removed in the liquid to be treated in a crystallization reaction tank, which comprises using a poorly soluble compound slurry as a chemical agent required for the crystallization reaction, adding the poorly soluble compound slurry and an acid to a part of a treated liquid flowing out from the crystallization reaction tank, and supplying the resulting liquid into the crystallization reaction tank as a circulating liquid.

14. The method according to claim 13, wherein the crystallization reaction tank and a seed crystal production tank are used, the liquid to be treated and the circulating liquid are supplied into the seed crystal production tank, and fine crystal particles in the liquid are taken out from the crystallization reaction tank and supplied into the seed crystal production tank, the fine crystal particles are grown in the seed crystal production tank to form seed crystals, and the seed crystals grown in the seed crystal production tank are supplied into the crystallization reaction tank.

15. The method according to claim 14, wherein the liquid flowing out from the seed crystal production tank is merged with the treated liquid flowing out from the crystallization reaction tank.

16. The method according to any of claims 13 through 15, wherein the liquid to be treated and the circulating liquid are introduced into the crystallization reaction tank tangentially to a transverse section of the crystallization reaction tank.

17. The method according to any of claims 13 through 16, wherein air is supplied into a central portion of the transverse section of the crystallization reaction tank.

18. The method according to any of claims 13 through 17, wherein a reaction vessel of a shape in which the transverse section of a lower portion is smaller than the transverse section of an upper portion is used as the crystallization reaction tank, and the liquid to be treated and the circulating liquid are introduced into the lower portion of the reaction tank.

19. The method according to any of claims 13 through 18, wherein a reaction vessel of which a lowermost portion has an inverted conical shape is used as the crystallization reaction tank.

20. The method according to any of claims 1 through 19, wherein phosphorus is removed from the liquid to be treated, which contains phosphorus and ammonia nitrogen, by crystallizing out magnesium ammonium phosphate from the liquid to be treated.

21. The method according to any of claims 1 through 19, wherein phosphorus is removed from the liquid to be treated, which contains phosphorus, by crystallizing out hydroxyapatite from the liquid to be treated.

22. The method according to any of claims 1 through 19, wherein fluorine is removed from the liquid to be treated, which contains fluoride ions, by crystallizing out calcium fluoride from the liquid to be treated.

23. The method according to any of claims 1 through 19, wherein calcium is removed from the liquid to be treated, which contains calcium ions, by crystallizing out calcium carbonate from the liquid to be treated.

24. The method according to any of claims 1 through 19, wherein carbonate ions are removed from the liquid to be treated, which contains carbonate ions, by crystallizing out calcium carbonate from the liquid to be treated.

25. An apparatus for removing ions to be removed in a liquid to be treated by crystallizing out crystal particles of a poorly soluble salt of the ions to be removed in the liquid to be treated through a crystallization reaction, which comprises: a crystallization reaction tank; a liquid-to-be-treated supply pipe that supplies the liquid to be treated into the crystallization reaction tank; a treated liquid discharge pipe that leads out a treated liquid flowing out from the crystallization reaction tank; a circulating water supply pipe that branches off from the treated liquid discharge pipe and feeds the treated liquid back into the crystallization reaction tank; and chemical agent supply means for supplying a chemical agent required for the crystallization reaction into the circulating water; wherein the liquid-to-be-treated supply pipe and the circulating water supply pipe are connected to the crystallization reaction tank tangentially to a transverse section of the reaction tank.

26. The apparatus according to claim 25, further having an air supply pipe that supplies air into a central portion of the transverse section of the crystallization reaction tank.

**27.** The apparatus according to claim 25 or 26, wherein the crystallization reaction tank is a vessel of a shape in which the transverse section of a lower portion is smaller than the transverse section of an upper portion, and the liquid-to-be-treated supply pipe and the circulating water supply pipe are connected to the lower portion of the crystallization reaction tank.

**28.** The apparatus according to any of claims 25 through 27, wherein the crystallization reaction tank is a vessel of which a lowermost portion has an inverted conical shape.

**29.** The apparatus according to any of claims 25 through 28, further having a seed crystal production tank, wherein the liquid-to-be-treated supply pipe and the circulating water supply pipe are also connected to the seed crystal production tank, and further having a fine crystal particle transfer pipe that transfers fine crystal particles in the crystallization reaction tank into the seed crystal production tank from the crystallization reaction tank, and a seed crystal transfer pipe that transfers seed crystals grown in the seed crystal production tank into the crystallization reaction tank.

**30.** The apparatus according to any of claims 25 through 29, having crystal recovery means for recovering grown crystal particles from the crystallization reaction tank.

**31.** An apparatus for removing ions to be removed in a liquid to be treated by crystallizing out crystal particles of a poorly soluble salt of the ions to be removed in the liquid to be treated through a crystallization reaction, which comprises: a crystallization reaction tank; a liquid cyclone; a liquid-to-be-treated supply pipe that supplies the liquid to be treated into the crystallization reaction tank; a treated liquid transfer pipe that leads out a treated liquid flowing out from the crystallization reaction tank into the liquid cyclone; a treated liquid discharge pipe that leads out outflow water from the liquid cyclone; a circulating water supply pipe that branches off from the treated liquid discharge pipe and feeds the treated liquid back into the crystallization reaction tank; a concentrated solid transfer pipe that supplies fine crystal particles concentrated and separated out by the liquid cyclone into the crystallization reaction tank; and chemical agent supply means for supplying a chemical agent required for the crystallization reaction into the circulating water.

**32.** The apparatus according to claim 31, having a liquid cyclone outflow water transfer pipe that supplies a part of the outflow water from the liquid cyclone into an upper portion of the crystallization reaction tank.

**33.** The apparatus according to claim 31 or 32, further having a seed crystal production tank, wherein the liquid-to-be-treated supply pipe and the circulating water supply pipe are also connected to the seed crystal production tank, and further having a fine crystal particle transfer pipe that transfers the fine crystal particles concentrated and separated out by the liquid cyclone into the seed crystal production tank, and a seed crystal transfer pipe that transfers seed crystals grown in the seed crystal production tank into the crystallization reaction tank.

**34.** The apparatus according to any of claims 31 through 33, wherein the liquid-to-be-treated supply pipe and the circulating water supply pipe are connected to the crystallization reaction tank tangentially to a transverse section of the crystallization reaction tank.

**35.** The apparatus according to any of claims 31 through 34, further having an air supply pipe that supplies air into a central portion of the transverse section of the crystallization reaction tank.

**36.** The apparatus according to any of claims 31 through 35, wherein the crystallization reaction tank is a vessel of a shape in which the transverse section of a lower portion is smaller than the transverse section of an upper portion, and the liquid-to-be-treated supply pipe and the circulating water supply pipe are connected to the lower portion of the crystallization reaction tank.

**37.** The apparatus according to any of claims 31 through 36, wherein the crystallization reaction tank is a vessel of which a lowermost portion has an inverted conical shape.

**38.** The apparatus according to any of claims 31 through 37, having crystal recovery means for recovering grown crystal particles from the crystallization reaction tank.

**39.** An apparatus for removing ions to be removed in a liquid to be treated by crystallizing out crystal particles of a poorly soluble salt of the ions to be removed in the liquid to be treated through a crystallization reaction, which comprises: a crystallization reaction tank; a liquid-to-be-treated supply pipe that supplies the liquid to be treated into the crystallization reaction tank; a treated liquid discharge pipe that leads out a treated liquid flowing out from the crystallization reaction tank; a circulating water supply pipe that branches off from the treated liquid discharge pipe and feeds the treated liquid back into the crystallization reaction tank; and chemical agent supply means for supplying a chemical agent required for the crystallization reaction and an acid into the circulating water.

40. The apparatus according to claim 39, having an adjustment tank that receives the circulating water branched off from the treated liquid and then supplies the circulating water into the crystallization reaction tank, wherein the chemical agent required for the crystallization reaction and the acid are supplied into the adjustment tank.

41. The apparatus according to claim 39 or 40, further having a seed crystal production tank, wherein the liquid-to-be-treated supply pipe and the circulating water supply pipe are also connected to the seed crystal production tank, and further having a fine crystal particle transfer pipe that transfers fine crystal particles in the crystallization reaction tank into the seed crystal production tank from the crystallization reaction tank, and a seed crystal transfer pipe that transfers seed crystals grown in the seed crystal production tank into the crystallization reaction tank.

42. The apparatus according to any of claims 39 through 41, wherein the liquid-to-be-treated supply pipe and the circulating water supply pipe are connected to the crystallization reaction tank tangentially to a transverse section of the crystallization reaction tank.

43. The apparatus according to any of claims 39 through 41, further having an air supply pipe that supplies air into a central portion of the transverse section of the crystallization reaction tank.

44. The apparatus according to any of claims 39 through 43, wherein the crystallization reaction tank is a vessel of a shape in which the transverse section of a lower portion is smaller than the transverse section of an upper portion, and the liquid-to-be-treated supply pipe and the circulating water supply pipe are connected to the lower portion of the crystallization reaction tank.

45. The apparatus according to any of claims 39 through 44, wherein the crystallization reaction tank is a vessel of which a lowermost portion has an inverted conical shape.

46. The apparatus according to any of claims 39 through 45, having crystal recovery means for recovering grown crystal particles from the crystallization reaction tank.

47. The apparatus according to any of claims 25 through 46, wherein phosphorus is removed from the liquid to be treated, which contains phosphorus and ammonia nitrogen, by crystallizing out magnesium ammonium phosphate from the liquid to be treated.

48. The apparatus according to any of claims 25 through 46, wherein phosphorus is removed from the liquid to be treated, which contains phosphorus, by crystallizing out hydroxyapatite from the liquid to be treated.

49. The apparatus according to any of claims 25 through 46, wherein fluorine is removed from the liquid to be treated, which contains fluoride ions, by crystallizing out calcium fluoride from the liquid to be treated.

50. The apparatus according to any of claims 25 through 46, wherein calcium is removed from the liquid to be treated, which contains calcium ions, by crystallizing out calcium carbonate from the liquid to be treated.

51. The apparatus according to any of claims 25 through 46, wherein carbonate ions are removed from the liquid to be treated, which contains carbonate ions, by crystallizing out calcium carbonate from the liquid to be treated.

FIG. 1

FIG. 2

A-A'

FIG. 3

FIG. 4

FIG. 5

FIG. 6

A–A'

FIG. 7

FIG. 8

A-A'

FIG. 9

FIG. 10

A–A'

FIG. 11

FIG. 12

FIG. 13

FIG. 14

FIG. 15

FIG. 16

FIG. 17

COUNTER
FLOW

ASCENDING
FLOW

FIG. 18

FIG. 19

FIG. 20

FIG. 21

FIG. 22

FIG. 23

FIG. 24

FIG. 25

| INTERNATIONAL SEARCH REPORT | International application No. |
|---|---|
| | PCT/JP2004/000437 |

**A. CLASSIFICATION OF SUBJECT MATTER**
Int.Cl$^7$ B01D9/02, C01B25/45, 25/32, C01F11/22, C02F1/58

According to International Patent Classification (IPC) or to both national classification and IPC

**B. FIELDS SEARCHED**

Minimum documentation searched (classification system followed by classification symbols)
Int.Cl$^7$ B01D9/02, C01B25/45, 25/32, C01F11/22, C02F1/58

Documentation searched other than minimum documentation to the extent that such documents are included in the fields searched
Jitsuyo Shinan Koho        1926–1996    Toroku Jitsuyo Shinan Koho    1994–2004
Kokai Jitsuyo Shinan Koho   1971–2004    Jitsuyo Shinan Toroku Koho    1996–2004

Electronic data base consulted during the international search (name of data base and, where practicable, search terms used)
WPI

**C. DOCUMENTS CONSIDERED TO BE RELEVANT**

| Category* | Citation of document, with indication, where appropriate, of the relevant passages | Relevant to claim No. |
|---|---|---|
| X | JP 2002-370094 A (Ebara Corp.), | 13-15,18-24, |
| | 24 December, 2002 (24.12.02), | 39-41,44-51 |
| A | Claims; Page 3, Par. No. [0014] to page 4, | 1-12,16,17, |
| | Par. No. [0020]; Fig. 1 | 25-38,42,43 |
| | (Family: none) | |
| | | |
| A | JP 2002-159977 A (Ebara Corp.), | 1-51 |
| | 04 June, 2002 (04.06.02), | |
| | Claims; page 3, Par. No. [0008] to page 4, | |
| | Par. No. [0014]; Fig. 1 | |
| | (Family: none) | |

☒ Further documents are listed in the continuation of Box C.          ☐ See patent family annex.

| * Special categories of cited documents: | "T" later document published after the international filing date or priority date and not in conflict with the application but cited to understand the principle or theory underlying the invention |
|---|---|
| "A" document defining the general state of the art which is not considered to be of particular relevance | |
| "E" earlier application or patent but published on or after the international filing date | "X" document of particular relevance; the claimed invention cannot be considered novel or cannot be considered to involve an inventive step when the document is taken alone |
| "L" document which may throw doubts on priority claim(s) or which is cited to establish the publication date of another citation or other special reason (as specified) | "Y" document of particular relevance; the claimed invention cannot be considered to involve an inventive step when the document is combined with one or more other such documents, such combination being obvious to a person skilled in the art |
| "O" document referring to an oral disclosure, use, exhibition or other means | |
| "P" document published prior to the international filing date but later than the priority date claimed | "&" document member of the same patent family |

| Date of the actual completion of the international search | Date of mailing of the international search report |
|---|---|
| 15 April, 2004 (15.04.04) | 27 April, 2004 (27.04.04) |

| Name and mailing address of the ISA/ | Authorized officer |
|---|---|
| Japanese Patent Office | |
| Facsimile No. | Telephone No. |

Form PCT/ISA/210 (second sheet) (January 2004)

<table>
<tr><td colspan="2"><strong>INTERNATIONAL SEARCH REPORT</strong></td><td>International application No.<br><br>PCT/JP2004/000437</td></tr>
</table>

C (Continuation). DOCUMENTS CONSIDERED TO BE RELEVANT

| Category* | Citation of document, with indication, where appropriate, of the relevant passages | Relevant to claim No. |
|---|---|---|
| A | JP 2002-336875 A  (Ebara Corp.),<br>26 November, 2002 (26.11.02),<br>Claims; page 3, Par. No. [0009] to page 4,<br>Par. No. [0016]; Fig. 1<br>(Family: none) | 1-51 |
| A | JP 61-93893 A  (Ebara Infiruko Kabushiki Kaisha),<br>12 May, 1986 (12.05.86),<br>Claims; page 2, upper left column, line 15<br>to lower right column, line 4<br>(Family: none) | 1-51 |

Form PCT/ISA/210 (continuation of second sheet) (January 2004)